# EUROPEAN PATENT SPECIFICATION

(11) **EP 2 767 506 B1**
(45) Date of publication and mention of the grant of the patent: **01.08.2018**
(21) Application number: 12840591.7
(22) Date of filing: 04.10.2012
(51) Int. Cl.: H01M 8/0662, C01B 3/38, H01M 8/04, H01M 8/06, C01B 3/58, C01B 3/34, H01M 8/0668, H01M 8/04701, H01M 8/0612, H01M 8/0432, H01M 8/04223, H01M 8/04014

(54) **HYDROGEN PRODUCING DEVICE AND CONTROL METHOD THEREFOR, AND FUEL CELL SYSTEM**
WASSERSTOFFERZEUGUNGSVORRICHTUNG UND STEUERVERFAHREN DAFÜR SOWIE BRENNSTOFFZELLENSYSTEM
DISPOSITIF DE PRODUCTION D'HYDROGÈNE, SON PROCÉDÉ DE COMMANDE, ET SYSTÈME DE CELLULE À COMBUSTIBLE

(30) Priority: 14.10.2011 JP 2011226428
(43) Date of publication of application: 20.08.2014
(73) Proprietor: Panasonic Corporation, Osaka 571-8501 (JP)
(72) Inventor: NARITA, Satoru, Chuo-ku Osaka 540-6207 (JP)
(74) Representative: Grünecker Patent- und Rechtsanwälte PartG mbB
(86) International application number: PCT/JP2012/006395
(87) International publication number: WO 2013/054496

(56) References cited:
- WO-A1-2009/061072
- JP-A- H0 471 169
- JP-A- H1 064 570
- JP-A- H05 147 903
- JP-A- 2001 351 661
- JP-A- 2002 184 441
- JP-A- 2003 104 702
- JP-A- 2003 176 105
- JP-A- 2005 032 564
- JP-A- 2008 532 252

## Description

### Technical Field

The present invention relates to a hydrogen generator, a method of controlling the hydrogen generator, and a fuel cell system, and particularly to a hydrogen generator configured to generate a hydrogen-containing gas by a reforming reaction between a hydrocarbon-containing raw material gas and water in a reformer, a method of controlling the hydrogen generator, and a fuel cell system.

### Background Art

A fuel cell that is a small device but capable of generating electric power with high efficiency has been developed as an electric power generator of a distributed energy supply source. Although a hydrogen gas is used as a fuel utilized for electric power generation of the fuel cell, means for supplying the hydrogen gas has not been developed as a common infrastructure. Therefore, when the fuel cell is utilized at a consumption place, in many cases, a hydrogen generator generates a hydrogen-containing gas by a steam-reforming reaction from a raw material, such as a city gas or an LPG, obtained from an existing fossil material infrastructure, and the hydrogen-containing gas is supplied to the fuel cell. A reaction portion of the reformer includes a catalyst, such as a Ru catalyst or a Ni catalyst, which is suitable for the reaction.

The hydrogen-containing gas contains carbon monoxide. Since the carbon monoxide deteriorates the performance of the fuel cell, a CO remover configured to reduce the carbon monoxide concentration is provided. Typically used as the CO remover is a CO shift converter configured to cause a water gas shift reaction (shift reaction) between the carbon monoxide and steam and a CO selective oxidizer configured to oxidize the carbon monoxide mainly by an oxidizing agent, such as a small amount of air. Each of a reaction portion of the CO shift converter and a reaction portion of the CO selective oxidizer includes a catalyst suitable for each reaction. For example, the CO shift converter includes a Cu-Zn catalyst, and the CO selective oxidizer includes a Ru catalyst.

One advantage of such a distributed energy supply source is that necessary energy can be obtained when necessary. Therefore, it is desirable that the electric power generation of the fuel cell be stopped when there is no energy demand. On this account, the fuel cell is required to start up and stop frequently, so that the hydrogen generator is required to be able to start up in a short period of time in accordance with the start-up of the fuel cell. In order to start up the hydrogen generator, the temperatures of various catalysts for the generation of the hydrogen and the removal of the CO need to be quickly increased to appropriate temperatures by using a heating unit, such as a heater or a combustor.

Proposed as a method of starting up the hydrogen generator is a method of first supplying to the CO shift converter the raw material heated by the heating unit and then supplying the raw material to the reformer (see PTL 1, for example).

Proposed as another method of starting up the hydrogen generator is a method of simultaneously increasing the temperature of a shift catalyst layer and the temperature of a desulfurization catalyst layer by the heater (see PTL 2, for example).

### Citation List

### Patent Literature

PTL 1: Japanese Laid-Open Patent Application Publication No. 2007-326725
PTL 2: Japanese Laid-Open Patent Application Publication No. 5-147903

JP 2003 104702 A relates to an apparatus for generating hydrogen-containing gas and its operation method. WO 2009/061072 A1 relates to a fuel process apparatus of multiple desulfurizers.

### Summary of Invention

### Technical Problem

As in PTL 2, proposed as the method of starting up the hydrogen generator is a method of preferentially increasing the temperature of the CO shift converter. However, to quickly start up the hydrogen generator, the temperatures of the catalysts, such as a reforming catalyst, a CO shift catalyst, a CO selective oxidation catalyst, and a desulfurization catalyst, included in respective reactors have to be quickly increased to temperatures appropriate for respective reactions. Therefore, not only the reactor including the catalyst that removes the carbon monoxide in the hydrogen-containing gas but also the other catalysts or their reactors need to be heated by a heating unit, such as a heater or a combustor.

On this account, as in PTL 1, respective reactors and the like are simultaneously heated by the heater when starting up the hydrogen generator. With this, a temperature increasing time can be shortened. In this case, problems are that a heater having a large capacity or a large number of heaters are required, and this requires an expensive high-power electric control instrument or a large power supply capacity. The electric power necessary to start up the hydrogen generator and the like becomes extremely high temporarily. Therefore, a problem is that in a case where the electric power from a commercial power supply is used to start up the hydrogen generator and the like, and the sum of the electric power necessary to start up the hydrogen generator and the like and the power consumed at home becomes equal to or larger than a set capacity of a breaker, the hydrogen generator and the like cannot be started up.

In contrast, in a case where the electric capacity of the heater is set to be small in accordance with the existing electric control instrument and power supply capacity, it requires a long time to increase the temperature of the catalyst to an appropriate temperature. With this, problems are that it takes a long time to start up the hydrogen generator, and the consumption energy at the time of the start-up increases.

The present invention was made to solve the above problems, and an object of the present invention is to provide a hydrogen generator that is prevented from being unable to be started up, is reduced in size, and is reduced in start-up time, a method of controlling the hydrogen generator, and a fuel cell system.

### Solution to Problem

A hydrogen generator according to the present invention is defined in claim 1. A method of controlling a hydrogen generator is defined in claim 6. Further advantageous embodiments are defined in the dependent claims.

The present invention has the above configuration and has an effect of being able to provide the hydrogen generator that is prevented from being unable to be started up, is reduced in size, and is reduced in start-up time, the method of controlling the hydrogen generator, and the fuel cell system.

### Brief Description of Drawings

[Fig. 1] Fig. 1 is a block diagram schematically showing the configuration of a hydrogen generator according to an illustrative Embodiment 1 not part of the present invention.
[Fig. 2] Fig. 2 is a block diagram schematically showing the configuration of the hydrogen generator according to an illustrative Embodiment 2 not part of the present invention.
[Fig. 3] Fig. 3 is a block diagram schematically showing the configuration of the hydrogen generator according to Embodiment 3 of the present invention.
[Fig. 4] Fig. 4 is a flow chart showing one example of a method of controlling the hydrogen generator according to Embodiment 3 of the present invention.
[Fig. 5] Fig. 5 is a block diagram schematically showing the configuration of the hydrogen generator according to Embodiment 4 of the present invention.
[Fig. 6] Fig. 6 is a block diagram schematically showing the configuration of a fuel cell system according to Embodiment 5 of the present invention.
[Fig. 7] Fig. 7 is a block diagram schematically showing the configuration of the fuel cell system according to Embodiment 6 of the present invention.
[Fig. 8] Fig. 8 is a block diagram schematically showing the configuration of the fuel cell system according to Embodiment 7 of the present invention.

### Description of Embodiments

Hereinafter, embodiments of the present invention will be specifically explained in reference to the drawings.

The same reference signs are used for the same or corresponding components, and a repetition of the same explanation is avoided.

**Illustrative Embodiment 1** not part of the invention but facilitates understanding of the present invention

### Configuration of Hydrogen Generator

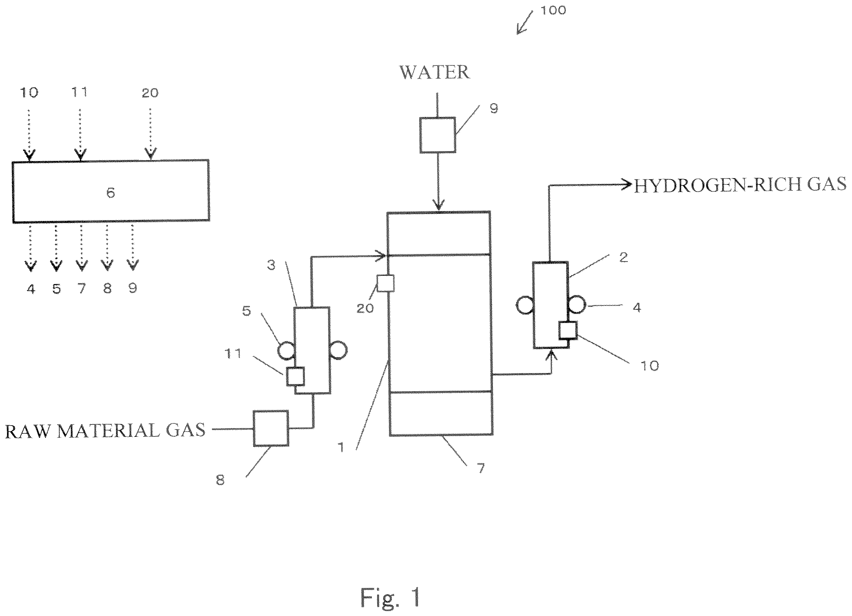

Fig. 1 is a block diagram schematically showing the configuration of a hydrogen generator 100 according to this Embodiment 1.

The hydrogen generator 100 includes: a reformer 1; reaction portions that are a CO remover 2 and a first desulfurizer 3; a first heater 4; a second heater 5; and a controller 6. The hydrogen generator 100 may further include a CO removal temperature detector 10, a desulfurization temperature detector 11, a combustor 7, a raw material supply unit 8, and a water supply unit 9.

The reformer 1 is a reactor configured to cause a reforming reaction between a hydrocarbon-containing raw material gas and water to generate a hydrogen-containing gas. The reformer 1 is configured such that a case thereof accommodates a reforming catalyst, such as a Ru catalyst. The case is connected to the raw material supply unit 8 via a raw material gas passage and also connected to the water supply unit 9 via a reforming water passage. Examples of the raw material gas supplied from the raw material supply unit 8 include: hydrocarbon components, such as a natural gas and an LPG; alcohols, such as methanol; and naphtha components. The water supplied from the water supply unit 9 may be a liquid state or a gas state (steam). A reforming temperature detector 20 is provided at an appropriate position of the reformer 1. The reforming temperature detector 20 detects the temperature of the reformer 1 (for example, the temperature of the reforming catalyst).

The CO remover 2 is a reactor connected to the reformer 1 via a hydrogen-containing gas passage and configured to remove carbon monoxide in the hydrogen-containing gas generated in the reformer 1. A CO removing catalyst, such as a Cu-Zn-based catalyst, can be used as a catalyst that removes the carbon monoxide. The first heater 4 and the CO removal temperature detector 10 are provided at the CO remover 2. The first heater 4 is a heater configured to heat the CO remover 2. For example, a sheath heater is used as the first heater 4. The CO removal temperature detector 10 detects the temperature of the CO remover 2, in particular, the temperature of the CO removing catalyst in the CO remover 2.

The first desulfurizer 3 is a reactor that is disposed on the raw material gas passage so as to be located between the raw material supply unit 8 and the reformer 1 and that is configured to remove sulfur in the raw material gas, supplied to the reformer 1, by a reaction between the sulfur and hydrogen. A metal oxide based desulfurization catalyst is used in this reaction. The second heater 5 and the desulfurization temperature detector 11 are provided at the first desulfurizer 3. The second heater 5 is a heater configured to heat the first desulfurizer 3. For example, a sheath heater is used as the second heater 5. The desulfurization temperature detector 11 detects the temperature of the first desulfurizer 3, in particular, the temperature of the desulfurization catalyst in the first desulfurizer 3.

For example, the combustor 7 is constituted by: a flame burner configured to combust a part of the raw material gas or a residual hydrogen-containing gas (fuel exhaust gas) having returned from a hydrogen gas supply destination (fuel cell, for example) to which the hydrogen generator 100 supplies a hydrogen gas; and a fan configured to supply air that is combusted together with the residual hydrogen-containing gas. The combustor 7 is provided in the vicinity of the reformer 1 and heats the reformer 1. The combustor 7 can further heat the CO remover 2 and the first desulfurizer 3. For example, the CO remover 2 or the first desulfurizer 3 can be heated by the combustor 7 in a case where the CO remover 2 or the first desulfurizer 3 is suitably provided in the vicinity of the combustor 7 or the reformer 1. Or, the CO remover 2 can be heated in a case where the raw material gas, the temperature of which has become high in the reformer 1 in accordance with the heating of the reformer 1, is introduced to the CO remover 2.

Examples of the controller 6 include a microcontroller, a CPU, a MPU, a logic circuit, and a PLC (Programmable Logic Controller). The controller 6 controls operations (such as on-off operations) of at least the first heater 4 and the second heater 5 based on the temperatures detected by the CO removal temperature detector 10 and the desulfurization temperature detector 11. Specifically, when starting up the hydrogen generator 100, the controller 6 starts the operation of one of the first heater 4 and the second heater 5, then stops the operation of the one heater at a predetermined timing, and then starts the operation of the other heater. Further, after the controller 6 has started the operation of the other heater, it stops the operation of the other heater at a predetermined timing, and then starts the operation of the one heater again. As above, when starting up the hydrogen generator 100, the controller 6 causes the first heater 4 and the second heater 5 to operate such that the operation of the first heater 4 and the operation of the second heater 5 do not overlap each other. The "one heater" may be the first heater 4, and "the other heater" may be the second heater 5. In contrast, the "one heater" may be the second heater 5, and "the other heater" may be the first heater 4.

The controller 6 also controls the operations of the combustor 7, the raw material supply unit 8, and the water supply unit 9 based on the temperature detected by the reforming temperature detector 20, and the like. For example, the controller 6 causes the raw material supply unit 8 to adjust the flow rate of the raw material gas supplied to the reformer 1. In addition, the controller 6 causes the water supply unit 9 to adjust the flow rate of the water supplied to the reformer 1.

The CO removal temperature detector 10 provided at the CO remover 2 may be provided in a catalyst layer accommodated in the CO remover 2 to directly measure the temperature of the catalyst layer. Further, the CO removal temperature detector 10 may indirectly measure the temperature of the catalyst layer by measuring the temperature of a matter correlated to the temperature of the catalyst layer. Examples of the temperature of the matter correlated to the temperature of the catalyst layer include the temperature of a wall or the like of the CO removal temperature detector 10 that accommodates the catalyst layer, the temperature in the vicinity of the CO removal temperature detector 10, and the temperature of a gas flowing into or flowing out from the CO removal temperature detector 10. Similarly, the reforming temperature detector 20 provided at the reformer 1 may be able to directly or indirectly measure the temperature of the catalyst layer accommodated in the reformer 1. The desulfurization temperature detector 11 provided at the first desulfurizer 3 may also be able to directly or indirectly measure the temperature of the catalyst layer accommodated in the first desulfurizer 3.

### Method of Controlling Hydrogen Generator When Starting Up Hydrogen Generator

When starting up the hydrogen generator 100, an operation of heating the CO remover 2 by the first heater 4 and an operation of heating the first desulfurizer 3 by the second heater 5 are performed so as not to overlap each other, and between these heating operations, the reformer 1 is heated by the combustor 7. The operation of heating the CO remover 2 is switched to the operation of heating the first desulfurizer 3 when a condition is satisfied, that is, when the temperature detected by the CO removal temperature detector 10 is equal to or higher than a predetermined first temperature.

Specifically, in an operation of starting up the hydrogen generator 100, the controller 6 starts the operation of the first heater 4. With this, the CO remover 2 is heated. The controller 6 controls the first heater 4, that is, turns on (supplies power to) and off (stops supplying power to) the first heater 4 such that the temperature of the CO removing catalyst detected by the CO removal temperature detector 10 becomes equal to or higher than the preset first temperature. Here, the first temperature is set to a temperature at which the CO removing catalyst can properly achieve a function of removing the carbon monoxide. For example, the first temperature is set to 180 to 300°C, preferably 200°C.

At the same time when the operation of the first heater 4 is started or when a predetermined condition A is satisfied, the controller 6 causes the raw material supply unit 8 and the combustor 7 to operate. With this, the raw material gas supplied from the raw material supply unit 8 through a bypass passage, not shown, or through the fuel cell and the like is combusted in the combustor 7, so that the reformer 1 and the raw material gas in the reformer 1 are heated. The raw material gas that has been increased in temperature flows from the reformer 1 into the CO remover 2. At this time, if the temperature of the CO removing catalyst is low, the steam contained in the raw material gas condenses in the CO remover 2. To prevent this water condensation, for example, a case is assumed where the temperature of the CO removing catalyst at the time of the start-up is a normal temperature that is about 25°C, and the above "predetermined condition A" may be set to a condition that "the temperature detected by the CO removal temperature detector 10 is equal to or higher than 120°C".

Next, when the temperature detected by the CO removal temperature detector 10 becomes equal to or higher than the first temperature, and a predetermined condition B is satisfied, the controller 6 causes the water supply unit 9 to supply water (reforming water) to the reformer 1. Here, the "predetermined condition B" is a condition that a combustion state of the combustor 7 is stable, and the temperature of the reformer 1 is a predetermined temperature, such as about 150°C.

At the same time when or after the supply of the reforming water is started, the controller 6 stops the operation of the first heater 4 and then starts the operation of the second heater 5. By the operation of the second heater 5, the first desulfurizer 3 is heated to be increased in temperature. The controller 6 controls the second heater 5 such that the temperature of the catalyst (first desulfurization catalyst) of the first desulfurizer 3 detected by the desulfurization temperature detector 11 becomes equal to or higher than a preset fifth temperature. The fifth temperature is set to a temperature at which the desulfurization catalyst properly functions. For example, the fifth temperature is set to 200 to 300°C, preferably 200°C.

After the operation of the second heater 5 is started, and when a predetermined condition C is satisfied, and the temperature detected by the CO removal temperature detector 10 becomes lower than the first temperature at which the CO removing catalyst functions, the controller 6 stops the operation of the second heater 5 and then starts the operation of the first heater 4 again. With this, the CO remover 2 is heated again by the first heater 4, so that the temperature of the CO removing catalyst in the CO remover 2 is maintained at a temperature suitable for the function of the CO removing catalyst. Here, the "predetermined condition C" can be set to a condition that the temperature of the reformer 1 is a temperature at which the reforming reaction properly proceeds, such as a condition that the temperature of the reformer 1 is equal to or higher than 450°C.

When the temperature detected by the CO removal temperature detector 10 becomes equal to or higher than the predetermined temperature (such as the first temperature) by the restart of the operation of the first heater 4, the controller 6 stops the operation of the first heater 4 and then restart the operation of the second heater 5. Then, the controller 6 controls the second heater 5 such that the temperature detected by the desulfurization temperature detector 11 becomes equal to or higher than the fifth temperature. With this, the first desulfurizer 3 is heated again by the second heater 5, so that the temperature of the first desulfurization catalyst in the first desulfurizer 3 is maintained at a temperature suitable for the function of the desulfurization catalyst.

When the temperature detected by the desulfurization temperature detector 11 reaches the fifth temperature, the controller 6 stops the operation of the second heater 5. Then, when a predetermined condition D is satisfied, the start-up of the hydrogen generator 100 is completed. The "predetermined condition D" can be set to a condition that the reactors that are the reformer 1 and the CO remover 2 are stably functioning, such as a condition that the temperature of the reforming catalyst is 600 to 650°C, in particular, 550°C or higher, and the temperature of the CO removing catalyst is 200°C or higher.

When the temperature detected by the CO removal temperature detector 10 becomes equal to or higher than the predetermined temperature, the controller 6 turns off the first heater 4 even during the operation of the first heater 4. Similarly, when the temperature detected by the desulfurization temperature detector 11 becomes equal to or higher than the predetermined temperature, the controller 6 turns off the second heater 5 even during the operation of the second heater 5. These states where the heaters 4 and 5 are turned off are also included in the operations of the heaters 4 and 5, respectively. To be specific, regardless of whether or not the power is being supplied, the heater that is a target controlled by the controller 6 such that the heater becomes equal to or higher than a predetermined temperature is an "operating heater". This predetermined temperature is, for example, a use temperature of the catalyst accommodated in the first desulfurizer 3 or the CO remover 2.

### Actions and Effects

According to the hydrogen generator 100, since the first heater 4 and the second heater 5 are not operated at the same time, the power consumption when starting up the hydrogen generator 100 can be reduced. Therefore, even in a case where electric power from a commercial power supply is used to start up the hydrogen generator 100 and the like, it is possible to avoid a case where the sum of the electric power necessary to start up the hydrogen generator 100 and the power consumed at home becomes equal to or larger than a set capacity of a breaker, and therefore, the hydrogen generator 100 cannot be started up.

By switching between the operation of the first heater 4 and the operation of the second heater 5, the temperatures of the catalysts included in the reactors can be quickly, sequentially increased to the temperatures suitable for respective reactions without increasing the capacities of the heaters or the number of heaters. Further, the increase in the cost of an electric control instrument and the increase in a power supply capacity can be suppressed.

**Illustrative Embodiment 2** not part of the invention but facilitates understanding of the present invention

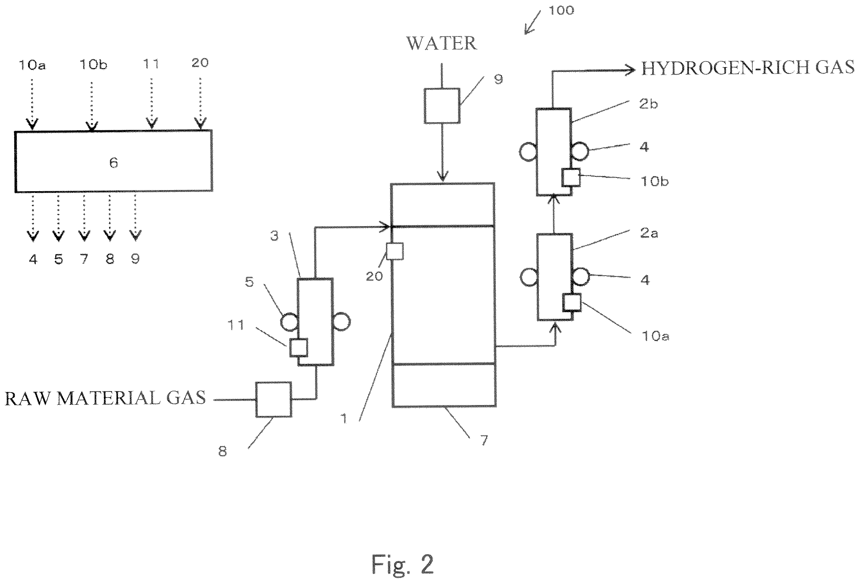

In this Embodiment 2, the CO remover 2 includes a CO shift converter 2a and a CO selective oxidizer 2b, and at least one of the first heaters 4 heats the CO shift converter 2a or the CO selective oxidizer 2b. Fig. 2 is a block diagram schematically showing the configuration of the hydrogen generator 100 according to this Embodiment 2.

### Configuration of Hydrogen Generator

The CO shift converter 2a is a CO remover connected to the reformer 1 via the hydrogen-containing gas passage and configured to cause a steam shift reaction (shift reaction) to remove the carbon monoxide in the hydrogen-containing gas. The CO shift converter 2a accommodates a CO shift catalyst, such as a Cu-Zn-based shift catalyst. The first heater 4 and a CO shift temperature detector 10a are provided at the CO shift converter 2a.

The CO selective oxidizer 2b is a CO remover connected to the CO shift converter 2a via the hydrogen-containing gas passage and configured to remove the carbon monoxide in the hydrogen-containing gas. The carbon monoxide in the hydrogen-containing gas is reduced in the CO selective oxidizer 2b by a CO selective oxidation reaction between the carbon monoxide and oxygen in introduced air. The CO selective oxidizer 2b accommodates a CO selective oxidation catalyst, such as a Ru-based selective oxidation catalyst. The first heater 4 and a CO selective oxidation temperature detector 10b are provided at the CO selective oxidizer 2b.

The first heaters 4 are, for example, sheath heaters and respectively heat the CO shift converter 2a and the CO selective oxidizer 2b. Any one of the first heaters 4 may heat the CO shift converter 2a or the CO selective oxidizer 2b. The first heaters 4 are respectively provided at the CO shift converter 2a and the CO selective oxidizer 2b. However, the first heaters 4 may be respectively provided in the vicinities of the CO shift converter 2a and the CO selective oxidizer 2b. With this, the first heaters 4 can respectively heat the CO shift converter 2a and the CO selective oxidizer 2b at the same time.

The CO shift temperature detector 10a detects the temperature of the CO shift converter 2a, in particular, the temperature of the CO shift catalyst in the CO shift converter 2a. The CO selective oxidation temperature detector 10b detects the temperature of the CO selective oxidizer 2b, in particular, the temperature of the CO selective oxidation catalyst in the CO selective oxidizer 2b. As with the CO removal temperature detector 10 explained in the illustrative Embodiment 1, each of the CO shift temperature detector 10a and the CO selective oxidation temperature detector 10b directly or indirectly measures the temperature of the catalyst layer accommodated in the CO shift converter 2a or the CO selective oxidizer 2b.

The controller 6 controls the operations of the first heaters 4 and the second heater 5 based on the temperatures detected by the CO shift temperature detector 10a, the CO selective oxidation temperature detector 10b, and the desulfurization temperature detector 11.

### Method of Controlling Hydrogen Generator When Starting Up Hydrogen Generator

When starting up the hydrogen generator 100 according to the present embodiment, an operation of heating the CO remover 2 (the CO shift converter 2a and the CO selective oxidizer 2b) by the first heaters 4 and an operation of heating the first desulfurizer 3 by the second heater 5 are performed so as not to overlap each other, and between these heating operations, the reformer 1 is heated by the combustor 7. When the controller 6 of the present embodiment starts the operations of the first heaters 4, and then, the temperature of the CO shift temperature detector 10a becomes equal to or higher than a preset second temperature, and the temperature of the CO selective oxidation temperature detector 10b becomes equal to or higher than a preset third temperature, the controller 6 stops the operations of the first heaters 4 and then starts the operation of the second heater 5.

Specifically, in the operation of starting up the hydrogen generator 100, the controller 6 starts the operations of the first heaters 4. With this, the CO shift converter 2a and the CO selective oxidizer 2b are heated. The controller 6 controls the first heaters 4 such that the temperature of the CO shift catalyst detected by the CO shift temperature detector 10a becomes equal to or higher than the preset second temperature, and the temperature of the CO selective oxidation catalyst detected by the CO selective oxidation temperature detector 10b becomes equal to or higher than the preset third temperature. The second temperature is set to a temperature at which the CO shift catalyst functions. For example, the second temperature is set to 180 to 300°C, preferably 200°C. The third temperature is set to a temperature at which the CO selective oxidation catalyst functions. For example, the third temperature is set to 100 to 180°C, preferably 140°C.

Here, even in a case where the temperature detected by the CO shift temperature detector 10a is lower than the second temperature during the operations of the first heaters 4, the temperature detected by the CO selective oxidation temperature detector 10b is equal to or higher than the third temperature in some cases. In this case, the controller 6 controls the first heaters 4 so as to turn on the first heater 4 that heats the CO shift converter 2a and turn off the first heater 4 that heats the CO selective oxidizer 2b. With this, one of the two first heaters 4 is temporarily turned off. However, since the first heaters 4 are controlled so as to perform heating, the first heaters 4 are regarded as operating. The same control operation as above may be performed in a case where the temperature of the CO selective oxidizer 2b detected by the CO selective oxidation temperature detector 10b is lower than the third temperature, and the temperature of the CO shift converter 2a detected by the CO shift temperature detector 10a is equal to or higher than the second temperature. In a case where the first heaters 4 are not configured to respectively heat the CO shift converter 2a and the CO selective oxidizer 2b, the first heaters 4 are operated until the temperatures of both the CO shift converter 2a and the CO selective oxidizer 2b become the appropriate temperatures.

At the same time when the operations of the first heaters 4 are started or when a predetermined condition E is satisfied, the controller 6 causes the raw material supply unit 8 and the combustor 7 to operate. With this, the raw material gas supplied from the raw material supply unit 8 is combusted in the combustor 7, so that the reformer 1 and the raw material gas in the reformer 1 are heated. The raw material gas that has been increased in temperature flows from the reformer 1 into the CO shift converter 2a and the CO selective oxidizer 2b. At this time, if the temperature of the CO shift converter 2a and the temperature of the CO selective oxidizer 2b are low, the steam contained in the raw material gas condenses in the CO shift converter 2a and the CO selective oxidizer 2b. To prevent this water condensation, as with the predetermined condition A, for example, a case is assumed where each of the temperature of the CO shift converter 2a and the temperature of the CO selective oxidizer 2b at the time of the start-up is a normal temperature that is about 25°C, and the above "predetermined condition E" may be set to a condition that "the temperature detected by the CO shift temperature detector 10a is equal to or higher than 120°C, and the temperature detected by the CO selective oxidation temperature detector 10b is equal to or higher than 100°C".

Next, when the temperature detected by the CO shift temperature detector 10a becomes equal to or higher than the second temperature, and the temperature detected by the CO selective oxidation temperature detector 10b become equal to or higher than the third temperature, and the predetermined condition B (see the illustrative Embodiment 1) is satisfied, the controller 6 causes the water supply unit 9 to supply the water to the reformer 1.

At the same time when or after the supply of the reforming water is started, the controller 6 stops the operations of the first heaters 4 and then starts the operation of the second heater 5. By the operation of the second heater 5, the first desulfurizer 3 is heated to be increased in temperature. The controller 6 controls the second heater 5 such that the temperature of the first desulfurizer 3 detected by the desulfurization temperature detector 11 becomes equal to or higher than the fifth temperature.

After the operation of the second heater 5 is started, and when a predetermined condition F is satisfied, and the temperature detected by the CO shift temperature detector 10a becomes lower than a sixth temperature, and the temperature detected by the CO selective oxidation temperature detector 10b becomes lower than a seventh temperature, the controller 6 stops the operation of the second heater 5 and then starts the operations of the first heaters 4 again. With this, the CO shift converter 2a and the CO selective oxidizer 2b are heated again by the first heaters 4, so that the temperature of the CO shift catalyst and the temperature of the CO selective oxidation catalyst are respectively maintained at temperatures suitable for the functions of respective catalysts. Here, as with the second temperature, the sixth temperature is preset to a temperature at which the CO shift catalyst properly functions. For example, the sixth temperature is preset to 180 to 300°C, preferably 200°C. As with the third temperature, the seventh temperature is preset to a temperature at which the CO selective oxidation catalyst properly functions. For example, the seventh temperature is preset to 100 to 180°C, preferably 170°C. The "predetermined condition F" can be set to a condition that the temperature of the reformer 1 is a temperature, such as 450°C or higher, at which the reforming reaction proceeds, and the temperature of the CO selective oxidation catalyst is a temperature, such as 170°C or higher, at which the catalyst properly functions.

When the temperature detected by the CO shift temperature detector 10a and the temperature detected by the CO selective oxidation temperature detector 10b respectively become the predetermined temperatures (the second temperature and the third temperature, for example) by the restart of the operations of the first heaters 4, the controller 6 stops the operations of the first heaters 4 and then restarts the operation of the second heater 5. Then, the controller 6 controls the second heater 5 such that the temperature detected by the desulfurization temperature detector 11 becomes equal to or higher than the fifth temperature. After that, when the temperature detected by the desulfurization temperature detector 11 reaches the fifth temperature, the controller 6 stops the operation of the second heater 5. Then, when a predetermined condition G is satisfied, the start-up of the hydrogen generator 100 is completed. The "predetermined condition G" can be set to a condition that the reactors that are the reformer 1, the CO shift converter 2a, and the CO selective oxidizer 2b are stably functioning, such as a condition that the temperature of the reforming catalyst is 550°C or higher, the temperature of the CO shift catalyst is 200°C or higher, and the temperature of the CO selective oxidation catalyst is 170°C or higher.

### Actions and Effects

According to the above configuration, in the operation of starting up the hydrogen generator 100, the raw material and the water are supplied to the reformer 1 whose temperature has reached a predetermined temperature, and the reformer 1 starts generating the hydrogen-containing gas by the steam-reforming reaction. At the time of this start-up, by the first heaters 4, the temperature of the CO shift catalyst in the CO shift converter 2a and the temperature of the CO selective oxidation catalyst in the CO selective oxidizer 2b have respectively reached the predetermined temperatures suitable for the functions of respective catalysts. Therefore, after the reformer 1 has started generating the hydrogen-containing gas, the carbon monoxide contained in the hydrogen-containing gas can be quickly reduced to a predetermined value or lower (substantially 10 ppm or lower) by the actions of the CO shift catalyst and the CO selective oxidation catalyst without waiting for the temperature of the CO shift catalyst and the temperature of the CO selective oxidation catalyst to respectively reach the predetermined temperatures. With this, the hydrogen generator 100 according to the present embodiment can generate the hydrogen-containing gas, whose carbon monoxide has been reduced, in a short period of time.

The first heaters 4 are configured to be able to respectively heat the CO shift converter 2a and the CO selective oxidizer 2b at the same time. Therefore, the temperature of the CO shift converter 2a and the temperature of the CO selective oxidizer 2b can be increased at the same time. On this account, the number of parts becomes small, the cost is reduced, and the temperature increasing times of the CO shift converter 2a and the CO selective oxidizer 2b are reduced.

Further, as with the illustrative Embodiment 1, since the first heaters 4 and the second heater 5 are not operated at the same time, the power consumption when starting up the hydrogen generator 100 can be reduced, so that it is possible to avoid a case where the hydrogen generator 100 cannot be started up. By switching between the operations of the first heaters 4 and the operation of the second heater 5, the temperatures of the reactors can be quickly, sequentially increased to the appropriate temperatures while preventing the electric control instrument from increasing in cost and preventing the power supply capacity from increasing.

### Embodiment 3

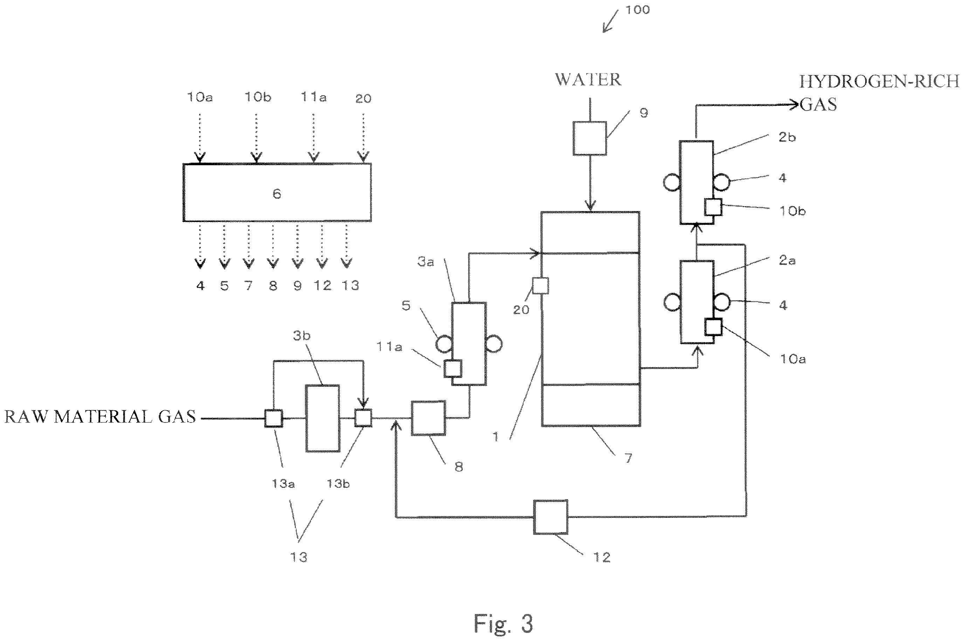

Fig. 3 is a block diagram schematically showing the configuration of the hydrogen generator 100 according to Embodiment 3 of the present invention. As shown in Fig. 3, the hydrogen generator 100 according to Embodiment 3 includes a second desulfurizer 3b, a raw material gas switching unit 13, and a hydrogen-containing gas supply unit 12.

### Configuration of Hydrogen Generator

The second desulfurizer 3b is an absorbent desulfurizer connected to the raw material supply unit 8 via the raw material gas passage and configured to remove sulfur in the raw material gas by absorption without causing a reaction between the sulfur and the hydrogen.

A first desulfurizer 3a is a hydro-desulfurizer that is provided on the raw material gas passage so as to be located between the raw material supply unit 8 and the reformer 1 and that is configured to cause the reaction between the sulfur in the raw material gas and the hydrogen to remove the sulfur by the absorption. In this reaction, a Cu-Zn-based hydrodesulfurization catalyst having an absorption ability even at normal temperature is used. The second heater 5 and a desulfurization temperature detector 11a are provided at the first desulfurizer 3a. As with the CO removal temperature detector 10, the desulfurization temperature detector 11a provided at the first desulfurizer 3a directly or indirectly measures the temperature of the catalyst layer accommodated in the first desulfurizer 3a.

The raw material gas switching unit 13 is a device configured to switch a supply destination of the raw material gas between the first desulfurizer 3a and the second desulfurizer 3b. For example, the raw material gas switching unit 13 includes: a first valve 13a and a second valve 13b respectively provided upstream and downstream of the second desulfurizer 3b and respectively constituted by three-way valves; and a raw material gas branch passage that bypasses the second desulfurizer 3b to connect the first valve 13a and the second valve 13b. To be specific, the raw material gas branch passage is connected to the raw material gas passage via the first valve 13a and the second valve 13b. Therefore, a state where the raw material gas flows through the second desulfurizer 3b and the first desulfurizer 3a along the raw material gas passage and a state where the raw material gas flows from the raw material gas passage to the raw material gas branch passage and then returns to the raw material gas passage to flow through the first desulfurizer 3a can be switched by suitably selecting communication directions of the first valve 13a and the second valve 13b. In the latter state, the raw material gas does not flow through the second desulfurizer 3b.

The combustor 7 is provided in the vicinity of at least one of the reactors that are the reformer 1, the CO shift converter 2a, the CO selective oxidizer 2b, and the first desulfurizer 3a and heats this reactor.

The hydrogen generator 100 includes a hydrogen-containing gas branch passage through which a part of the hydrogen-containing gas having flowed through the CO shift converter 2a is supplied to the first desulfurizer 3a. The hydrogen-containing gas branch passage has one end connected to the hydrogen-containing gas passage extending between the CO shift converter 2a and the CO selective oxidizer 2b and the other end connected to the raw material gas passage extending between the raw material gas switching unit 13 and the raw material supply unit 8. Then, the hydrogen-containing gas supply unit 12 constituted by a pump, a flow rate control valve, or the like is disposed on this hydrogen-containing gas branch passage. The hydrogen-containing gas supply unit 12 adjusts the pressure and flow rate of the hydrogen-containing gas in the hydrogen-containing gas branch passage. With this, a part of the hydrogen-containing gas discharged from an outlet port of the CO shift converter 2a is supplied to the first desulfurizer 3a. The one end of the hydrogen-containing gas branch passage may be connected to the hydrogen-containing gas passage located at an outlet port side of the CO selective oxidizer 2b, not the hydrogen-containing gas passage extending between the CO shift converter 2a and the CO selective oxidizer 2b. In this case, a part of the hydrogen-containing gas discharged from the outlet port of the CO selective oxidizer 2b is supplied to the first desulfurizer 3a.

The controller 6 controls the operations of the first heaters 4 and the second heater 5 based on the temperatures detected by the CO shift temperature detector 10a, the CO selective oxidation temperature detector 10b, and the desulfurization temperature detector 11a. In addition, the controller 6 controls the operations of the combustor 7, the raw material supply unit 8, the water supply unit 9, the hydrogen-containing gas supply unit 12, and the raw material gas switching unit 13.

### Method of Controlling Hydrogen Generator When Starting Up Hydrogen Generator

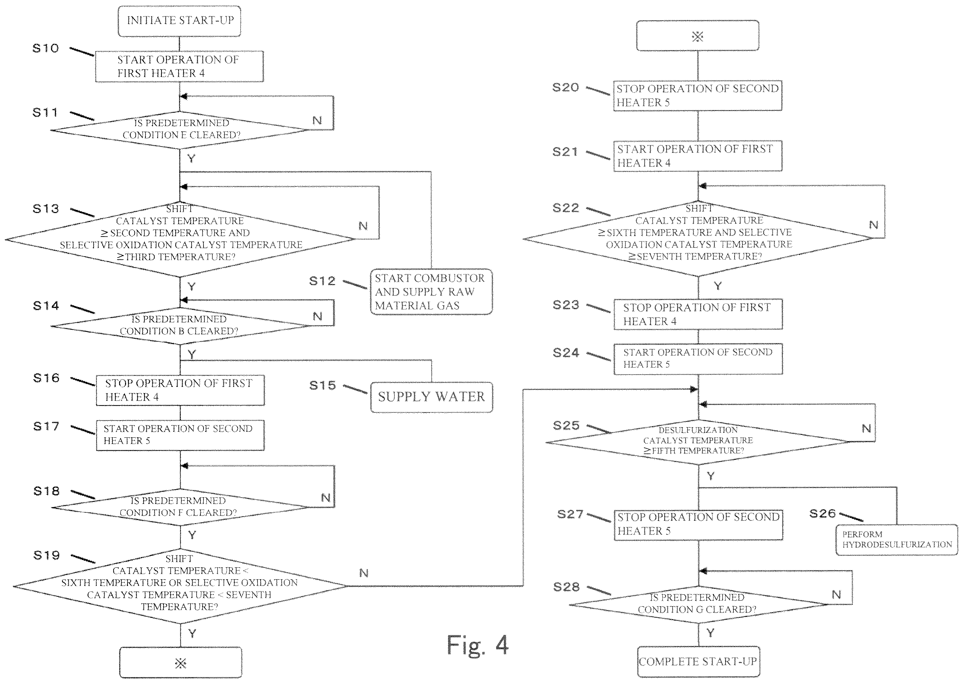

When starting up the hydrogen generator 100, the controller 6 starts the operations of the first heaters 4, then stops the operations of the first heaters 4, and then starts the operation of the second heater 5. When the temperature detected by the desulfurization temperature detector 11a becomes equal to or higher than a preset fourth temperature, the controller 6 causes the raw material gas switching unit 13 to switch the supply destination of the raw material gas from the second desulfurizer 3b to the first desulfurizer 3a. When the temperature detected by the desulfurization temperature detector 11a becomes equal to or higher than the preset fifth temperature, the controller 6 stops the operation of the second heater 5. Further, the controller 6 causes the second heater 5 to operate. After that, in at least one of a case where the temperature of the shift temperature detector is lower than the preset sixth temperature and a case where the temperature of the selective oxidation temperature detector is lower than the preset seventh temperature, the controller 6 stops the second heater 5 and causes the first heaters 4 to operate. Fig. 4 is a flow chart showing one example of the method of controlling the hydrogen generator 100 according to Embodiment 3 of the present invention.

Specifically, in the operation of starting up the hydrogen generator 100, the controller 6 starts the operations of the first heaters 4 (Step S10) and controls the first heaters 4 such that: the temperature detected by the CO shift temperature detector 10a becomes equal to or higher than the second temperature; and the temperature detected by the CO selective oxidation temperature detector 10b becomes equal to or higher than the third temperature.

At the same time when the operations of the first heaters 4 are started or when the predetermined condition E is satisfied (YES in Step S11), the controller 6 causes the raw material supply unit 8 and the combustor 7 to operate (Step S12). At this time, the controller 6 controls the raw material gas switching unit 13 such that the raw material gas flows through the second desulfurizer 3b along the raw material gas passage to be supplied to the first desulfurizer 3a, the combustor 7, and the reformer 1. Although the second desulfurizer 3b is not being heated at this time, the second desulfurizer 3b can remove the sulfur in the raw material gas by the absorption even at normal temperature. Therefore, after the sulfur contained in the raw material gas is removed by the second desulfurizer 3b, the raw material gas flows into the first desulfurizer 3a. The first desulfurizer 3a is not being heated by the second heater 5 at this moment. However, since the Cu-Zn-based hydrodesulfurization catalyst in the first desulfurizer 3a has the absorption ability even at normal temperature as described above, the sulfur remaining in the raw material gas is further removed by the first desulfurizer 3a. Then, the raw material gas whose sulfur has been removed by the first desulfurizer 3a and the second desulfurizer 3b is supplied to the combustor 7 and the reformer 1. Then, the reformer 1 is heated by the combustor 7.

When the temperature detected by the CO shift temperature detector 10a becomes equal to or higher than the second temperature, and the temperature detected by the CO selective oxidation temperature detector 10b becomes equal to or higher than the third temperature (YES in Step S13), and the predetermined condition B is satisfied (YES in Step S14), the controller 6 causes the water supply unit 9 to supply the water (reforming water) to the reformer 1 (Step S15).

At the same time when or after the reforming water is supplied, the controller 6 stops the operations of the first heaters 4 (Step S16) and then starts the operation of the second heater 5 (Step S17).

When the predetermined condition F is satisfied (YES in Step S18), and the temperature detected by the CO shift temperature detector 10a becomes lower than the sixth temperature, or the temperature detected by the CO selective oxidation temperature detector 10b becomes lower than the seventh temperature (YES in Step S19), the controller 6 stops the operation of the second heater 5 (Step S20) and then starts the operations of the first heaters 4 again (Step S21). With this, the CO shift converter 2a and the CO selective oxidizer 2b are heated again by the first heaters 4, so that the temperatures of the CO shift catalyst and the CO selective oxidation catalyst are respectively maintained at temperatures suitable for the functions of the respective catalysts.

When, by the restart of the operations of the first heaters 4, the temperature detected by the CO shift temperature detector 10a becomes equal to or higher than the sixth temperature, and the temperature detected by the CO selective oxidation temperature detector 10b becomes equal to or higher than the seventh temperature (YES in Step S22), the controller 6 stops the operations of the first heaters 4 (Step S23) and then restarts the operation of the second heater 5 (Step S24).

When the temperature of the desulfurization catalyst detected by the desulfurization temperature detector 11a reaches the fifth temperature (YES in Step S25), the controller 6 controls the hydrogen-containing gas supply unit 12 such that the hydrogen concentration of the raw material gas becomes about 1 to 10%. With this, a part of the hydrogen-containing gas discharged from the CO shift converter 2a flows from the hydrogen-containing gas passage to the hydrogen-containing gas branch passage to further flow from the hydrogen-containing gas branch passage into the raw material gas passage.

When the temperature of the desulfurization catalyst detected by the desulfurization temperature detector 11a reaches the fifth temperature (YES in Step S25), the controller 6 controls the raw material gas switching unit 13. With this, the raw material gas does not flow through the second desulfurizer 3b but flows through the raw material gas branch passage into the raw material gas passage to be supplied to the first desulfurizer 3a having the fifth temperature or higher, the combustor 7, and the reformer 1 (Step S26). In this case, the first desulfurizer 3a is heated by the second heater 5 to a temperature most appropriate when the hydrodesulfurization catalyst in the first desulfurizer 3a functions. Therefore, the ability of the first desulfurizer 3a to remove the sulfur is in a high state. On this account, although the desulfurization by the second desulfurizer 3b is omitted, the sulfur in the raw material gas can be adequately removed only by the first desulfurizer 3a. Then, the raw material gas whose sulfur has been removed by the first desulfurizer 3a is supplied to the combustor 7 and the reformer 1, so that the reformer 1 is heated by the combustor 7.

Then, the controller 6 stops the operation of the second heater 5 (Step S27). When the predetermined condition G is satisfied (YES in Step S28), the start-up of the hydrogen generator 100 is completed. After the operation of Step S27 is terminated, the first heaters 4 and the second heater 5 become stop states. However, by the heat generation of the combustor 7, not only the reformer 1 but also the CO shift converter 2a, the CO selective oxidizer 2b, the first desulfurizer 3a, the second desulfurizer 3b, and the like may be heated.

The controller 6 may selectively restart the operation of the first heaters 4 or the second heater 5 according to need after having stopped the operation of the second heater 5 (Step S27). In addition, as shown in Fig. 4, when the temperature detected by the CO shift temperature detector 10a becomes equal to or higher than the sixth temperature, and the temperature detected by the CO selective oxidation temperature detector 10b becomes equal to or higher than the seventh temperature in Step S19 (NO in Step S19), the operations in Steps S20 to S24 (reheating of the CO removers by the first heaters 4) may be omitted, and the process may proceed to the operation in Step S25.

### Actions and Effects

According to the above configuration, when starting up the hydrogen generator 100, the second desulfurizer 3b that does not have to be heated performs the function of removing the sulfur. Therefore, even if the second heater 5 does not operate, the sulfur in the raw material gas is removed. On this account, when the CO shift converter 2a and the CO selective oxidizer 2b are heated by the first heaters 4 to temperatures suitable when the respective catalysts function, the raw material gas can be supplied without waiting for the temperature of the hydrodesulfurization catalyst in the first desulfurizer 3a to reach a predetermined temperature. As above, by using the second desulfurizer 3b and causing the first heaters 4 to preferentially operate, the hydrogen generator 100 can be started up in a short period of time to quickly generate the hydrogen-containing gas whose sulfur and carbon monoxide have been reduced.

The hydrodesulfurization catalyst in the first desulfurizer 3a functions even at normal temperature. Therefore, even in a case where the first desulfurizer 3a is not heated by the second heater 5, the first desulfurizer 3a can remove the sulfur from the raw material gas. On this account, the concentration of the sulfur in the raw material gas can be reduced by the first desulfurizer 3a in addition to the second desulfurizer 3b to such an adequately low level that the hydrogen generator 100 can operate. Thus, the start-up time of the hydrogen generator 100 can be further shortened.

Further, even when the second heater 5 is not operating, the first desulfurizer 3a receives heat from the combustor 7 in the vicinity of the combustor 7, so that the temperature of the hydrodesulfurization catalyst in the first desulfurizer 3a increases. With this, a time it takes for the hydrodesulfurization catalyst to reach a predetermined temperature by the second heater 5 after the start of the operation of the second heater 5 becomes short. Therefore, the start-up time of the hydrogen generator 100 can be further shortened.

As with the illustrative Embodiment 2, at the time of the start of the reforming reaction of the reformer 1, the temperature of the CO shift converter 2a and the temperature of the CO selective oxidizer 2b have reached the predetermined temperatures by the first heaters 4. Therefore, the hydrogen generator 100 can be started up in a short period of time. Further, since the first heaters 4 respectively heat the CO shift converter 2a and the CO selective oxidizer 2b at the same time, the cost can be reduced, and the temperature increasing times of the CO shift converter 2a and the CO selective oxidizer 2b can be shortened.

Further, as with the illustrative Embodiment 1, since the first heaters 4 and the second heater 5 are not operated at the same time, the power consumption at the time of the start-up of the hydrogen generator 100 can be suppressed, and it is possible to avoid a case where the hydrogen generator 100 cannot be started up. By switching between the operations of the first heaters 4 and the operation of the second heater 5, the temperatures of the reactors can be quickly, sequentially increased to appropriate temperatures while preventing the electric control instrument from increasing in cost and preventing the power supply capacity from increasing.

### Embodiment 4

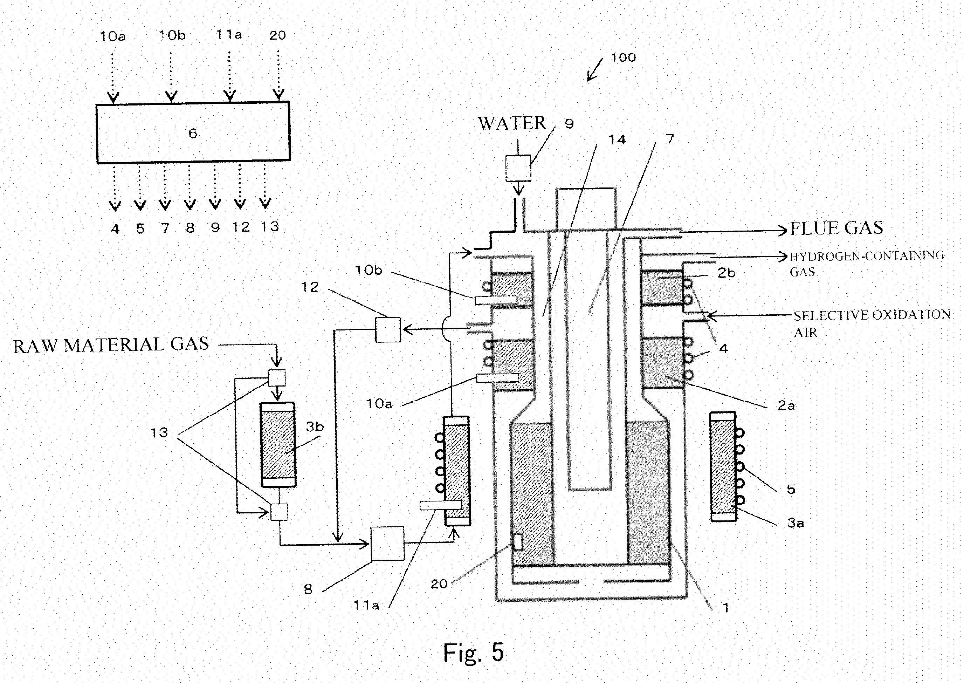

Fig. 5 is a block diagram schematically showing the configuration of the hydrogen generator 100 according to Embodiment 4 of the present invention. As shown in Fig. 5, the hydrogen generator 100 according to Embodiment 4 includes a vaporizing mixing portion 14 configured to mix the raw material gas and the water to vaporize the mixture.

### Configuration of Hydrogen Generator

The hydrogen generator 100 is configured by integrating the reformer 1, the CO shift converter 2a, the CO selective oxidizer 2b, the combustor 7, the first desulfurizer 3a, and the vaporizing mixing portion 14 with one another. This integrally configured portion includes: an inner tube around the combustor 7; and an outer tube containing the inner tube. Various catalysts are provided at appropriate positions of the integrally configured portion, and various connecting ports are formed at appropriate positions of the integrally configured portion. Example of the connecting ports include: a raw material gas inflow port connected to the raw material gas passage; a reforming water inflow port connected to the reforming water passage; a flue gas outflow port connected to a flue gas passage; a hydrogen-containing gas outflow port connected to the hydrogen-containing gas passage; and a selective oxidation air inflow port into which selective oxidation air flows.

In the integrally configured portion, the reformer 1 having a tubular shape is provided at an outer periphery of a lower portion (lower portion between the combustor 7 and the inner tube) of the combustor 7 having a cylindrical shape, and the vaporizing mixing portion 14 having a lower end communicating with the reformer 1 and having a tubular shape is provided at an outer periphery of an upper portion (upper portion between the combustor 7 and the inner tube) of the combustor 7. The raw material gas inflow port and the reforming water inflow port are connected to the vaporizing mixing portion 14. Therefore, the raw material gas flowing from the raw material gas inflow port and the water flowing from the reforming water inflow port are mixed and heated in the vaporizing mixing portion 14, and the mixture gas of the raw material gas and the steam flows into the reformer 1.

The flue gas passage having a tubular shape is formed between the combustor 7 and the reformer 1. The flue gas discharged from the combustor 7 flows through the flue gas passage to heat the reformer 1 and the vaporizing mixing portion 14. The flue gas passage communicates with the flue gas outflow port formed at the upper portion of the integrally configured portion, and the flue gas is discharged to the outside through the flue gas outflow port.

The CO shift converter 2a having a tubular shape and the CO selective oxidizer 2b having a tubular shape are provided outside the vaporizing mixing portion 14 (at an upper portion between the inner tube and the outer tube). An inflow port of the CO shift converter 2a is connected to the reformer 1, and an inflow port of the CO selective oxidizer 2b is connected to an outflow port of the CO shift converter. An outflow port of the CO selective oxidizer 2b is connected to the hydrogen-containing gas passage via the hydrogen-containing gas outflow port. The CO shift converter 2a and the CO selective oxidizer 2b are arranged in the vicinity of the raw material gas inflow port and the reforming water inflow port.

The first desulfurizer 3a having a tubular shape is concentrically arranged around the reformer 1 (outside a lower portion of the outer tube) via a heat insulating material (not shown). The first desulfurizer 3a is connected to the raw material gas inflow port via the raw material gas passage.

### Actions and Effects

According to the above configuration, the CO shift converter 2a and the CO selective oxidizer 2b are arranged in the vicinity of the raw material gas inflow port and the reforming water inflow port. Therefore, there is a possibility that even in a case where the CO shift converter 2a and the CO selective oxidizer 2b are heated by the first heaters 4, the temperature of the CO shift converter 2a and the temperature of the CO selective oxidizer 2b decrease by the inflowing raw material gas and water after the stop of the operations of the first heaters 4. However, by alternately operating the first heaters 4 and the second heater 5, the temperature of the CO shift converter 2a and the temperature of the CO selective oxidizer 2b can be respectively maintained at predetermined temperatures or temperatures close to the predetermined temperatures. By the CO shift converter 2a and the CO selective oxidizer 2b, the concentration of the carbon monoxide in the hydrogen-containing gas can be reduced to such an adequately low level that the hydrogen generator 100 can operate. Therefore, the start-up time of the hydrogen generator 100 can be further shortened.

Since the reactors are integrally configured, the reactors transfer the heat to and receive the heat from one another. Therefore, the time and energy for heating the reactors can be reduced. Thus, the start-up time of the hydrogen generator 100 can be reduced, and the consumption energy at the time of the start-up of the hydrogen generator 100 can be reduced.

Further, as with Embodiment 3, by using the first desulfurizer 3a and the second desulfurizer 3b and preferentially causing the first heaters 4 to operate, the start-up time of the hydrogen generator 100 is further reduced.

As with the illustrative Embodiment 2, at the time of the start of the reforming reaction of the reformer 1, the temperature of the CO shift converter 2a and the temperature of the CO selective oxidizer 2b have reached the predetermined temperatures by the first heaters 4. Therefore, the hydrogen generator 100 can start up in a short period of time. Further, since the first heaters 4 heat the CO shift converter 2a and the CO selective oxidizer 2b at the same time, the cost is reduced, and the temperature increasing times of the CO shift converter 2a and the CO selective oxidizer 2b are shortened.

Further, as with the illustrative Embodiment 1, since the first heaters 4 and the second heater 5 are not operated at the same time, the power consumption at the time of the start-up of the hydrogen generator 100 is reduced, and it is possible to avoid a case where the hydrogen generator 100 cannot be started up. By switching between the operations of the first heaters 4 and the operation of the second heater 5, the temperatures of the reactors can be quickly, sequentially increased to appropriate temperatures while suppressing the increase in the size of the electric control instrument and the increase in the power supply capacity.

### Embodiment 5

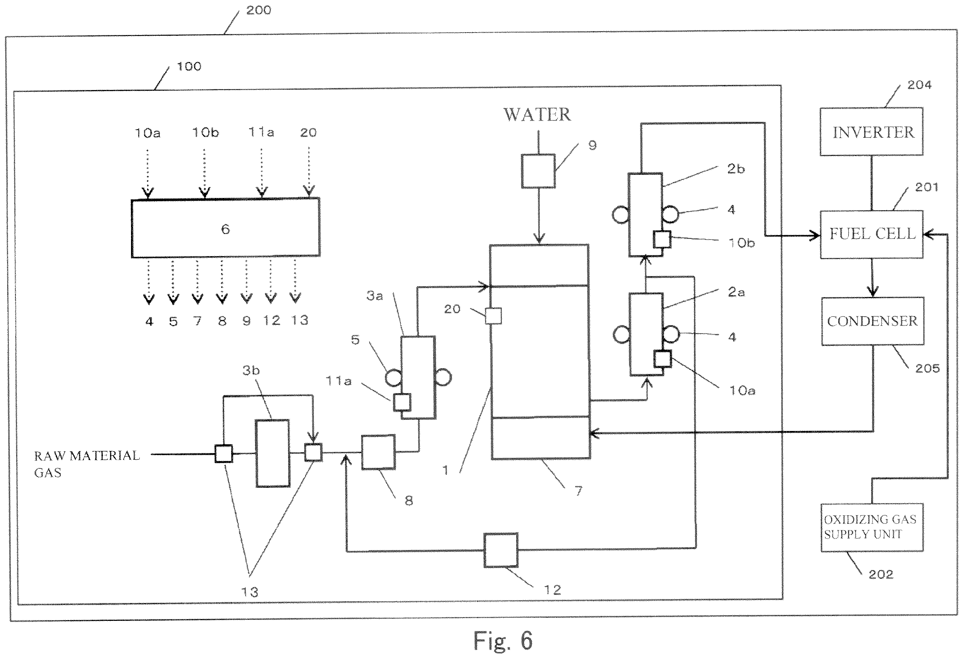

Embodiment 5 relates to a fuel cell system 200 including the hydrogen generator 100 according to any one of the illustrative Embodiment 1 to 2 and Embodiments 3 to 4. Fig. 6 is a block diagram schematically showing the configuration of the fuel cell system 200 according to Embodiment 5 of the present invention.

The fuel cell system 200 includes the hydrogen generator 100, a fuel cell 201, an oxidizing gas supply unit 202, and an inverter 204. The fuel cell system 200 may further include a condenser 205. The hydrogen generator 100 is, for example, the hydrogen generator 100 according to any one of the illustrative Embodiments 1 to 2 and Embodiments 3 to 4 and supplies the hydrogen-containing gas, whose carbon monoxide and sulfur have been removed, to the fuel cell 201 as the fuel gas. Fig. 6 shows, as one example, the configuration in which the hydrogen generator 100 according to Embodiment 3 is adopted.

The fuel cell 201 is a device configured to cause the fuel gas that is the hydrogen-containing gas supplied from the hydrogen generator 100 and the oxidizing gas to electrochemically react with each other to generate electric power. For example, oxygen in air is used as the oxidizing gas. In this case, an air supply unit, such as a blower, is utilized as the oxidizing gas supply unit 202. The fuel cell 201 discharges to the condenser 205 a fuel exhaust gas of the supplied fuel gas and an oxidizing exhaust gas of the supplied oxidizing gas, the fuel exhaust gas and oxidizing exhaust gas being unconsumed in the electrochemical reaction. The condenser 205 recovers heat from the fuel exhaust gas and oxidizing exhaust gas discharged from the fuel cell 201 and separates the water, condensed by the heat recovery, from the fuel exhaust gas. The fuel exhaust gas from which the heat and the condensed water have been recovered is supplied to the combustor 7. The combustor 7 combusts the raw material gas from the raw material supply unit 8 and/or the fuel exhaust gas from the condenser 205 to heat the reformer 1. The inverter 204 converts DC power, generated in the fuel cell 201, into AC power.

In a start-up step performed before the electric power generation of the fuel cell 201, the controller 6 executes the operations of the first heaters 4 and the operation of the second heater 5 such that these operations do not overlap each other. When starting an electric power generation step in which the fuel cell 201 generates the electric power, the controller 6 stops the operations of the first heaters 4 and the operation of the second heater 5 and causes the raw material supply unit 8 to supply the raw material gas, the amount of which is larger than the amount of raw material gas supplied in the start-up step, to the hydrogen generator 100. Here, the amount of raw material gas supplied in the electric power generation step is, for example, three times the amount of raw material gas supplied in the start-up step.

One of the reasons why the amount of raw material gas supplied in the electric power generation step is larger than the amount of raw material gas supplied in the start-up step is as below. To be specific, in the start-up step, the raw material gas is used to heat the reformer 1 and the like, and in the electric power generation step, the raw material gas is used to heat the reformer 1 and the like and also used in the electric power generating reaction in the fuel cell 201.

According to the above configuration, when the hydrogen generator 100 starts up, and the reactions proceed once in the CO shift converter 2a and the CO selective oxidizer 2b, the amount of heat generated by the reactions increases. Therefore, even in a case where the operations of the first heaters 4 and the operation of the second heater 5 are stopped in the electric power generation step, the reactors can be maintained at temperatures at which respective catalysts function. On this account, in a state where the power consumption of the heaters 4 and 5 is reduced, the hydrogen generator 100 can generate the fuel gas, the amount of which corresponds to an amount required in the fuel cell 201.

The amount of raw material gas supplied in the electric power generation step is larger than the amount of raw material gas supplied in the start-up step. Therefore, in the electric power generation step, the amount of raw material gas supplied to the combustor 7 by the raw material supply unit 8 and the amount of fuel exhaust gas supplied from the condenser 205 to the combustor 7 increase. This fuel exhaust gas contains hydrogen that is a combustible component and methane (major component of a city gas) that has not been reformed. Therefore, the combustor 7 can combust the raw material gas and the fuel exhaust gas to adequately heat the reactors, such as the reformer 1, the CO shift converter 2a, the CO selective oxidizer 2b, and the first desulfurizer 3a, located in the vicinity of the combustor 7, to such a degree that the reactions can be respectively performed in the reactors. On this account, even in a case where the operations of the first heaters 4 and the operation of the second heater 5 are stopped in the electric power generation step, the reactors can be maintained at temperatures at which respective catalysts function. On this account, the consumption energy of the hydrogen generator 100 can be further reduced.

In the configuration in which the hydrogen generator 100 according to Embodiment 4 shown in Fig. 5 is adopted, the heat of the reformer 1 is transferred to the first desulfurizer 3a located around the reformer 1 Therefore, as the temperature of the reformer 1 increases, the amount of heat transferred from the reformer 1 to the first desulfurizer 3a also increases. On this account, the amount of heat transferred from the reformer 1 to the first desulfurizer 3a in a case where the temperature of the reformer 1 is adequately increased to a temperature necessary for the reforming reaction in the electric power generation step is larger than that in a case where the temperature of the reformer 1 is not so high in the start-up step. Thus, by performing the desulfurization using the second desulfurizer 3b in the start-up step, it is possible to prepare for the electric power generation while causing the first heaters 4 to operate but not causing the second heater to operate. With this, the process can shift from the start-up step to the electric power generation step as quickly as possible. Then, by causing the second heater 5 to operate after the start-up step is shifted to the electric power generation step, the first desulfurizer 3a is heated by the reformer 1 and the second heater 5 during the operation of the second heater 5. Therefore, the power consumption of the second heater 5 can be suppressed, and the start-up of the first desulfurizer 3a can be quickly performed.

### Embodiment 6

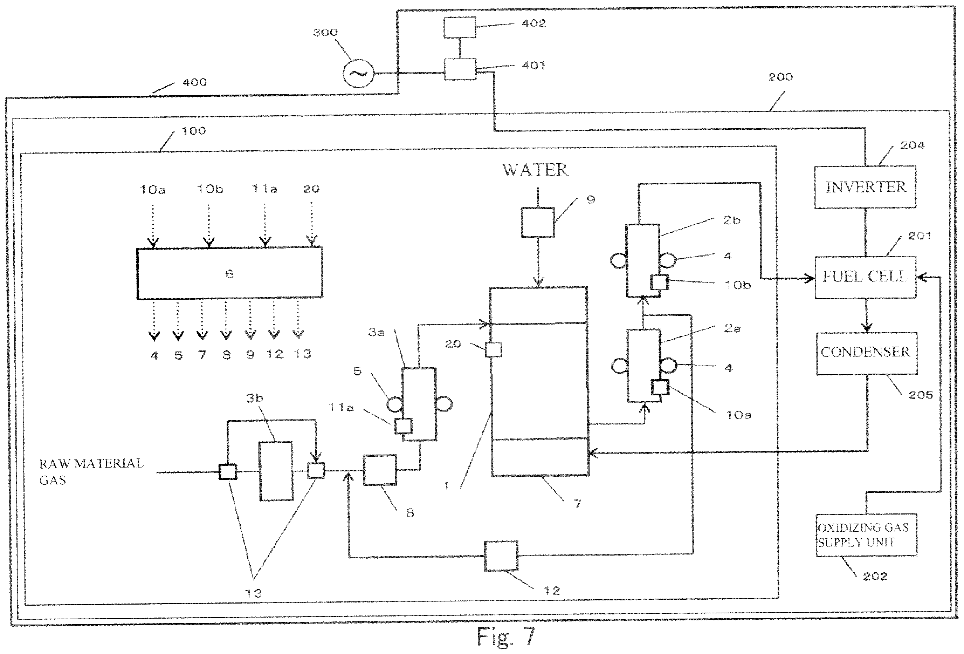

Embodiment 6 relates to the fuel cell system 200 to which electric power is supplied from a commercial power supply 300 through a breaker 401 in the start-up step of the fuel cell system 200. Fig. 7 is a block diagram schematically showing the configuration of the fuel cell system 200 according to Embodiment 6 of the present invention.

The fuel cell system 200 is supplied with the electric power from the commercial power supply 300 in the start-up step to cause the heaters 4 and 5 to operate by the supplied electric power. In the electric power generation step, the inverter 204 converts the DC power, generated in the fuel cell 201, into the AC power having the same frequency as the AC power of the commercial power supply 300, and the fuel cell system 200 supplies the electric power to a consumption place 400 in cooperation with the commercial power supply 300.

The consumption place 400 is provided with: the fuel cell system 200; an electric power load 402 that consumes the AC power supplied from the commercial power supply 300 or the fuel cell system 200; and the breaker 401. Since the fuel cell system 200 consumes the electric power supplied from the commercial power supply 300 in the start-up step, the fuel cell system 200 is one of electric power loads. However, since the fuel cell system 200 supplies the electric power in the electric power generation step, the fuel cell system 200 is distinguished from the electric power load 402 that is a general load that just consumes the electric power.

A line connected to the electric power load 402, a line connected to the inverter 204 of the fuel cell system 200, and a line connected to the commercial power supply 300 are connected to the breaker 401. With this, the electric power from the fuel cell system 200 is supplied to the electric power load 402 through the breaker 401. In a case where reverse power flow is possible, the electric power from the fuel cell system 200 is also supplied to the commercial power supply 300 through the breaker 401. The electric power from the commercial power supply 300 is supplied to the fuel cell system 200 and the electric power load 402 through the breaker 401. Breaking electric power is preset in the breaker 401. The breaker 401 is configured to be able to collectively or individually open and close passages, through which the AC power is supplied from the commercial power supply 300 to the inverter 204 and the electric power load 402, based on the breaking electric power. Therefore, in a case where the electric power supplied from the commercial power supply 300 to the fuel cell system 200 and the electric power load 402 exceeds the breaking electric power, the breaker 401 cuts the connections of the lines, so that the supply of the electric power to the fuel cell system 200 and the supply of the electric power to the electric power load 402 are collectively or individually stopped.

The controller 6 sets the electric power supplied to the first heaters 4 and the electric power supplied to the second heater, based on preset electric power (breaking electric power) based on which the breaker 401 cuts the supply of the electric power from the commercial power supply 300. To be specific, the controller 6 obtains the breaking electric power. For example, the breaking electric power is input by a user, a worker, or the like via a key (input portion) or the like to the controller 6. Or, the controller 6 may automatically obtain the breaking electric power from the breaker 401. The breaking electric power may be shown by a numerical value (W) indicating electric power or may be shown by levels, such as A, B, C, and D, set by stepwisely dividing the electric power. Then, for example, the controller 6 sets the electric power supplied to the first heaters 4 and the electric power supplied to the second heater 5, based on the obtained breaking electric power by using a relation, such as a formula or a table, in which the breaking electric power and the supply electric power are associated with each other. With this, as the breaking electric power is set to be larger, the maximum electric power supplied to the heater 4 and the maximum electric power supplied to the heater 5 are set to be larger. Thus, the electric power consumed by the heater 4 and the electric power consumed by the heater 5 increase, and the amount of heat generated by the heater 4 and the amount of heat generated by the heater 5 increase.

According to the above configuration, in the start-up step of the fuel cell system 200, that is, when starting up the hydrogen generator 100, the first heaters 4 or the second heater 5 is operated based on the set supply electric power. With this, it is possible to prevent a case where the electric power exceeding the breaking electric power is supplied from the commercial power supply 300 through the breaker 401 to the fuel cell system 200 by the operations of the heaters 4 and 5, and therefore, the breaker 401 cuts the supply of the electric power. Thus, it is possible to avoid a case where the hydrogen generator 100 cannot be started up, and therefore, the fuel cell system 200 cannot be started up.

The electric power supplied to the heater 4 and the electric power supplied to the heater 5 are determined in accordance with the breaking electric power set in each consumption place 400. Therefore, as the breaking electric power is set to be larger, the electric power supplied to the heater 4 and the electric power supplied to the heater 5 are set to be larger, and therefore, the start-up time of the hydrogen generator 100 is shortened.

The foregoing has explained a case where use electric power is adopted to determine whether to cut the electric power by the breaker 401. However, as with a breaker in an electrical switchboard at standard home, whether to cut the electric power may be determined based on a use current value. To be specific, in a case where a breaking current value is preset in the breaker 401, the controller 6 may obtain this breaking current value to set the electric power supplied to the first heaters 4 and the electric power supplied to the second heater 5, based on the breaking current value.

### Embodiment 7

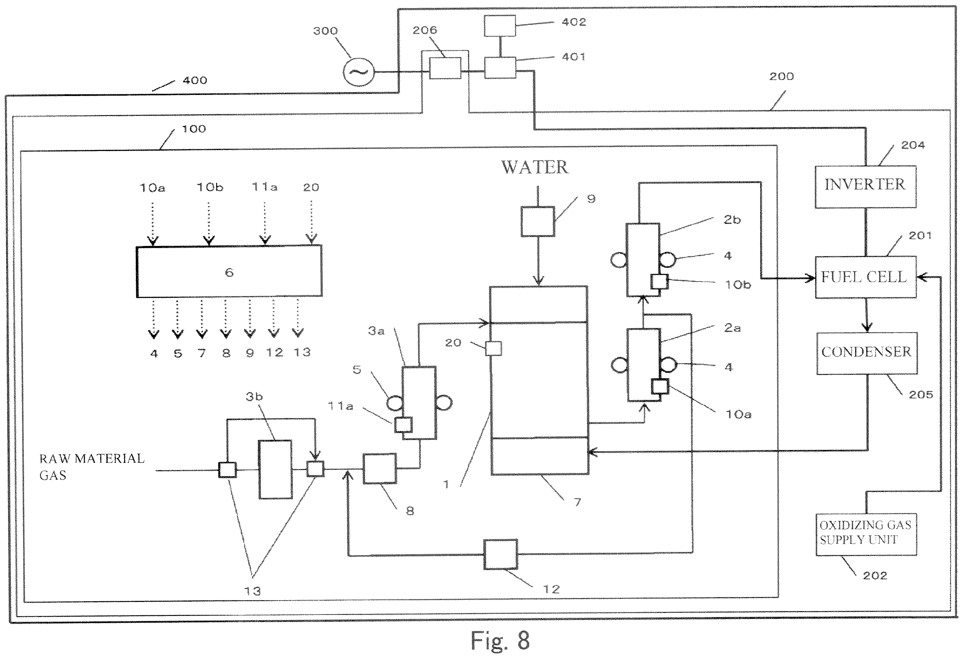

Fig. 8 is a block diagram schematically showing the configuration of the fuel cell system 200 according to Embodiment 7 of the present invention. As shown in Fig. 8, the fuel cell system 200 according to Embodiment 7 further includes an electric power meter 206 in addition to the breaker 401.

The electric power meter 206 is disposed on a distribution line connecting the commercial power supply 300 and the consumption place 400 and includes a current sensor and a voltage sensor. The electric power meter 206 obtains an electric power value, supplied from the commercial power supply 300 to the consumption place 400, based on the current and voltage of the electric power supplied from the commercial power supply 300 to the consumption place 400, the current and voltage being detected by the above sensors. Then, the electric power meter 206 outputs the obtained supply electric power value to the controller 6. Here, the electric power supplied to the consumption place 400 is the electric power consumed by the fuel cell system 200 and the electric power load 402 in the consumption place 400.

In a case where a differential value obtained by subtracting the supply electric power, detected by the electric power meter 206, from the breaking electric power is lower than a predetermined value in the start-up step, the controller 6 executes the operations of the first heaters 4 and the operation of the second heater 5 such that the operations of the first heaters 4 and the operation of the second heater 5 do not overlap each other. In a case where the electric power difference is equal to or higher than the predetermined value, the controller 6 executes the operations of the first heaters 4 and the operation of the second heater 5 such that the operations of the first heaters 4 and the operation of the second heater 5 overlap each other. Here, when only the first heaters 4 are operating, the predetermined value is a value larger than the supply electric power necessary to additionally cause the second heater 5 to operate. When only the second heater 5 is operating, the predetermined value is a value larger than the supply electric power necessary to additionally cause the first heaters 4 to operate. When the heaters 4 and 5 are not operating, the predetermined value is a value larger than the supply electric power necessary to cause the heaters 4 and 5 to operate.

According to the above configuration, in a state where the heaters 4 and 5 are not operating in the start-up step of the fuel cell system 200, that is, at the time of the initiation of the start-up of the hydrogen generator 100, the controller 6 obtains the supply electric power from the electric power meter 206. In a case where the differential value between the supply electric power and the breaking electric power obtained in advance is lower than a predetermined value that is larger than the electric power supplied to the heaters 4 and 5, the controller 6 starts only the operations of the first heaters 4 such that the operations of the first heaters 4 and the operation of the second heater 5 do not overlap each other. With this, it is possible to avoid a case where the electric power supplied from the commercial power supply 300 exceeds the breaking electric power, and therefore, the fuel cell system 200 cannot be started up. In contrast, in a case where the differential value of the electric power is equal to or higher than the predetermined value, the controller 6 starts the operations of the heaters 4 and 5 such that these operations overlap each other. With this, although the supply electric power increases, it does not exceed the breaking electric power. Therefore, while continuing the start-up of the fuel cell system 200, the temperatures of the reactors are increased to predetermined temperatures by the heaters 4 and 5. Thus, the start-up of the hydrogen generator 100 can be shortened.

In a state where only the first heaters 4 are operating in the start-up step of the fuel cell system 200, that is, during the start-up of the hydrogen generator 100, the controller 6 obtains the supply electric power from the electric power meter 206. This supply electric power includes the electric power supplied to the first heaters 4. Therefore, in a case where the differential value between the supply electric power and the breaking electric power is lower than the predetermined value that is larger than the electric power supplied to the second heater 5, the controller 6 causes the first heaters 4 to operate such that the operations of the first heaters 4 and the operation of the second heater 5 do not overlap each other. With this, it is possible to avoid a case where the electric power supplied from the commercial power supply 300 exceeds the breaking electric power, and therefore, the fuel cell system 200 cannot be started up. In contrast, in a case where the differential value of the electric power is equal to or higher than the predetermined value, the controller 6 causes the first heaters 4 and the second heater 5 to operate such that the operations of the first heaters 4 and the operation of the second heater 5 overlap each other. With this, the start-up of the hydrogen generator 100 can be shortened.

Further, in a state where only the second heater 5 is operating in the start-up step of the fuel cell system 200, the same control operation as in a state where only the first heaters 4 are operating as described above can be performed.

### Embodiment 8

In the above embodiments, when starting up the hydrogen generator 100, the operations of the first heaters 4 are started and then stopped, and the operation of the second heater 5 is then started. However, when starting up the hydrogen generator 100, the operation of the second heater 5 may be started and then stopped, and the operations of the first heaters 4 may be then started. In this case, when the temperature of the desulfurization catalyst detected by the desulfurization temperature detector 11a becomes equal to or higher than the fifth temperature by the operation of the second heater 5, the operation of the second heater 5 is stopped, and the operations of the first heaters 4 are started. When the temperature of the desulfurization catalyst becomes lower than the fifth temperature after the start of the operations of the first heaters 4, the first heaters 4 are stopped, and the operation of the second heater 5 is restarted.

The above embodiments may be combined with one another as long as these embodiments do not exclude one another.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art.

### Industrial Applicability

The hydrogen generator 100, the method of controlling the hydrogen generator 100, and the fuel cell system 200 according to the present invention are useful as, for example, the hydrogen generator 100 that is prevented from being unable to be started up, is reduced in size, and is reduced in start-up time, the method of controlling the hydrogen generator 100, and the fuel cell system 200.

### Reference Signs List

- 1: reformer
- 2: CO remover
- 2a: CO shift converter
- 2b: CO selective oxidizer
- 3: first desulfurizer
- 3a: first desulfurizer
- 3b: second desulfurizer
- 4: first heater
- 5: second heater
- 6: controller
- 7: combustor
- 8: raw material supply unit
- 9: water supply unit
- 10: CO removal temperature detector
- 10a: CO shift temperature detector
- 10b: CO selective oxidation temperature detector
- 11: desulfurization temperature detector
- 11a: desulfurization temperature detector
- 13: raw material gas switching unit
- 100: hydrogen generator
- 200: fuel cell system
- 201: fuel cell
- 202: oxidizing gas supply unit
- 204: inverter
- 300: commercial power supply
- 401: breaker

## Claims

1. A hydrogen generator comprising:
a reformer (1) configured to cause a reforming reaction between a hydrocarbon-containing raw material gas and water to generate a hydrogen-containing gas;
a CO remover (2) configured to remove carbon monoxide in the hydrogen-containing gas generated by the reformer, the CO remover (2) includes a CO shift converter (2a) configured to remove the carbon monoxide in the hydrogen-containing gas by a shift reaction and a CO selective oxidizer (2b) configured to remove the carbon monoxide in the hydrogen-containing gas by a CO selective oxidation reaction;
a CO shift temperature detector (10a) configured to detect a temperature of the CO shift converter (2a);
a CO selective oxidation temperature detector (10b) configured to detect a temperature of the CO selective oxidizer (2b);
a first desulfurizer (3, 3a) configured to cause a reaction between sulfur in the raw material gas supplied to the reformer and hydrogen to remove the sulfur;
a second desulfurizer (3b) configured to remove the sulfur in the raw material gas by absorption without causing the reaction between the sulfur and the hydrogen;
a raw material gas switching unit (13) configured to switch a supply destination of the raw material gas between the first desulfurizer (3a) and the second desulfurizer (3b);
a desulfurization temperature detector (11, 11a) configured to detect a temperature of the first desulfurizer (3a);
a first heater (4) configured to heat at least one of the CO shift converter and the CO selective oxidizer;
a second heater (5) configured to heat the first desulfurizer (3a); and
a controller (6) configured to control an operation of the first heater and an operation of the second heater, wherein
the controller (6) is configured to:
start the operation of the first heater,
then stop the operation of the first heater, in a case where the temperature detected by the CO shift temperature detector (10a) is equal to or higher than a preset second temperature, and the temperature detected by the CO selective oxidation temperature detector (10b) is equal to or higher than a preset third temperature, and
then start the operation of the second heater,
cause the raw material gas switching unit to switch the supply destination of the raw material gas from the second desulfurizer to the first desulfurizer in a case where the temperature detected by the desulfurization temperature detector is equal to or higher than a preset fourth temperature, and
stop the operation of the second heater in a case where the temperature detected by the desulfurization temperature detector is equal to or higher than a preset fifth temperature.

2. The hydrogen generator according to claim 1, further comprising:
a combustor (7) configured to heat at least one of the reformer, the CO remover, and the first desulfurizer;
a raw material supply unit (8) configured to supply the raw material gas to the reformer; and
a water supply unit (9) configured to supply the water to the reformer, wherein
the controller (6) is configured to start the operation of the first heater, an operation of the raw material supply unit, and an operation of the combustor, then start an operation of the water supply unit and stop the operation of the first heater, and then start the operation of the second heater.

3. A fuel cell system comprising:
the hydrogen generator according to claim 1;
a fuel cell (201) configured to cause a reaction between a fuel gas that is the hydrogen-containing gas supplied from the hydrogen generator and an oxidizing gas to generate electric power;
an oxidizing gas supply unit (202) configured to supply the oxidizing gas to the fuel cell;
an inverter (204) configured to convert DC power, generated by the fuel cell, into AC power;
a combustor (7) configured to heat at least one of the reformer, the CO remover, and the first desulfurizer; and
a raw material supply unit (8) configured to supply the raw material gas to the hydrogen generator, wherein:
in a start-up step performed before the fuel cell generates the electric power, the controller (6) included in the hydrogen generator is configured to execute the operation of the first heater and the operation of the second heater such that these operations do not overlap each other; and
in an electric power generation step in which the fuel cell starts generating the electric power, the controller (6) included in the hydrogen generator is configured to stop the operation of the first heater and the operation of the second heater and to cause the raw material supply unit to supply the raw material gas, via the first desulfurizer (3a), to the hydrogen generator, the amount of which is larger than the amount of raw material gas supplied in the start-up step.

4. The fuel cell system according to claim 3, wherein:
the inverter (204) is connected to a breaker (401) connected to a commercial power supply (300);
in the start-up step, the electric power is supplied from the commercial power supply through the breaker to the inverter, wherein the breaker (401) is configured to be able to collectively or individually open and close passages, through which the AC power is supplied from the commercial power supply (300) to the inverter (204) and an electric power load (402), based on the breaking electric power; and
the controller (6) is configured to set the electric power supplied to the first heater and the electric power supplied to the second heater based on the preset breaking electric power based on which the breaker cuts the supply of the electric power from the commercial power supply.

5. The fuel cell system according to claim 4, wherein the fuel cell system is provided at a consumption place including an electric power load connected to the breaker (401) together with the inverter (204), the breaker being connected to the commercial power supply,
the fuel cell system further comprising an electric power meter that is disposed on a distribution line connecting the commercial power supply (300) and the breaker (401) and that is configured to detect the electric power supplied from the commercial power supply to the consumption place, wherein:
in a case where an electric power difference obtained by subtracting the supply electric power, detected by the electric power meter, from the breaking electric power is smaller than a predetermined value, the controller is configured to execute the operation of the first heater and the operation of the second heater such that these operations do not overlap each other; and
in a case where the electric power difference is equal to or larger than the predetermined value, the controller is configured to execute the operation of the first heater and the operation of the second heater such that these operations overlap each other.

6. A method of controlling a hydrogen generator,
the hydrogen generator including:
a reformer (1) configured to cause a reforming reaction between a hydrocarbon-containing raw material gas and water to generate a hydrogen-containing gas;
a CO remover (2) configured to remove carbon monoxide in the hydrogen-containing gas generated by the reformer, the CO remover (2) includes a CO shift converter (2a) configured to remove the carbon monoxide in the hydrogen-containing gas by a shift reaction and a CO selective oxidizer (2b) configured to remove the carbon monoxide in the hydrogen-containing gas by a CO selective oxidation reaction;
a CO shift temperature detector (10a) configured to detect a temperature of the CO shift converter (2a);
a CO selective oxidation temperature detector (10b) configured to detect a temperature of the CO selective oxidizer (2b);
a first desulfurizer (3) configured to cause a reaction between sulfur in the raw material gas supplied to the reformer and hydrogen to remove the sulfur;
a second desulfurizer (3b) configured to remove the sulfur in the raw material gas by absorption without causing the reaction between the sulfur and the hydrogen;
a raw material gas switching unit (13) configured to switch a supply destination of the raw material gas between the first desulfurizer (3a) and the second desulfurizer (3b);
a desulfurization temperature detector (11, 11a) configured to detect a temperature of the first desulfurizer (3a);
a first heater (4) configured to heat at least one of the CO shift converter and the CO selective oxidizer;
a second heater (5) configured to heat the first desulfurizer; and
a controller (6) configured to control an operation of the first heater and an operation of the second heater, wherein
the controller (6) controls the first heater and the second heater so as to
start the operation of the first heater,
then stop the operation of the first heater, in a case where the temperature detected by the CO shift temperature detector (10a) is equal to or higher than a preset second temperature, and the temperature detected by the CO selective oxidation temperature detector (10b) is equal to or higher than a preset third temperature, and
then start the operation of the second heater,
cause the raw material gas switching unit to switch the supply destination of the raw material gas from the second desulfurizer to the first desulfurizer in a case where the temperature detected by the desulfurization temperature detector is equal to or higher than a preset fourth temperature, and
stop the operation of the second heater in a case where the temperature detected by the desulfurization temperature detector is equal to or higher than a preset fifth temperature.

## Patentansprüche

1. Wasserstoffgenerator, umfassend:
einen Reformer (1), der dazu eingerichtet ist, eine Reformierreaktion zwischen einem kohlenwasserstoffhaltigen Rohmaterialgas und Wasser zu bewirken, um ein wasserstoffhaltiges Gas zu erzeugen;
einen CO-Entferner (2), der dazu eingerichtet ist, Kohlenmonoxid in dem von dem Reformer erzeugten wasserstoffhaltigen Gas zu entfernen, wobei der CO-Entferner (2) einen CO-Shift-Konverter (2a) aufweist, der dazu eingerichtet ist, das Kohlenmonoxid in dem wasserstoffhaltigen Gas durch eine Shift-Reaktion zu entfernen, und ein CO-selektives Oxidationsmittel (2b), das dazu eingerichtet ist, das Kohlenmonoxid in dem wasserstoffhaltigen Gas durch eine CO-selektive Oxidationsreaktion zu entfernen;
einen CO-Shift-Temperaturdetektor (10a), der dazu eingerichtet ist, eine Temperatur des CO-Shift-Konverters (2a) zu erfassen;
einen CO-selektiven Oxidationstemperaturdetektor (10b), der dazu eingerichtet ist, eine Temperatur des CO-selektiven Oxidationsmittels (2b) zu erfassen;
einen ersten Entschwefeler (3, 3a), der dazu eingerichtet ist, eine Reaktion zwischen Schwefel in dem dem Reformer zugeführten Rohmaterialgas und Wasserstoff zur Entfernung des Schwefels zu bewirken;
einen zweiten Entschwefeler (3b), der dazu eingerichtet ist, den Schwefel in dem Rohmaterialgas durch Absorption zu entfernen, ohne die Reaktion zwischen dem Schwefel und dem Wasserstoff zu verursachen;
eine Rohmaterialgas-Umschalteinheit (13), die dazu eingerichtet ist, ein Zufuhrziel des Rohmaterialgases zwischen dem ersten Entschwefeler (3a) und dem zweiten Entschwefeler (3b) umzuschalten;
einen Entschwefelungs-Temperaturdetektor (11, 11a), der dazu eingerichtet ist, eine Temperatur des ersten Entschweflers (3a) zu erfassen;
eine erste Heizeinrichtung (4), die dazu eingerichtet ist, den CO-Shift-Konverter und/oder den CO-selektiven Oxidator zu erwärmen;
eine zweite Heizeinrichtung (5), die dazu eingerichtet ist, den ersten Entschwefeler (3a) zu erwärmen; und
eine Steuereinheit (6), die dazu eingerichtet ist, einen Betrieb der ersten Heizeinrichtung und einen Betrieb der zweiten Heizeinrichtung zu steuern, wobei
die Steuereinheit (6) dazu eingerichtet ist:
den Betrieb der ersten Heizeinrichtung zu starten,
anschließend den Betrieb der ersten Heizeinrichtung, in einem Fall zu stoppen, in dem die von dem CO-Shift-Temperaturdetektor (10a) erfasste Temperatur gleich oder höher als eine voreingestellte zweite Temperatur ist, und die durch den CO-selektiven Oxidationstemperaturdetektor (10b) erfasste Temperatur gleich oder höher als eine voreingestellte dritte Temperatur ist, und
anschließend den Betrieb der zweiten Heizeinrichtung zu starten,
die Rohmaterialgas-Umschalteinheit zu veranlassen das Zufuhrziel des Rohmaterialgases von dem zweiten Entschwefeler zu dem ersten Entschwefeler in einem Fall umzuschalten, in dem die von dem Entschwefelungs-Temperaturdetektor erfasste Temperatur gleich oder höher als eine voreingestellte vierte Temperatur ist, und
den Betrieb der zweiten Heizeinrichtung in einem Fall zu stoppen, in dem die durch den Entschwefelungs-Temperaturdetektor erfasste Temperatur gleich oder höher als eine voreingestellte fünfte Temperatur ist.

2. Wasserstoffgenerator nach Anspruch 1, weiterhin umfassend:
eine Brennkammer (7), die dazu eingerichtet ist, den Reformer und/oder den CO-Entferner und/oder den ersten Entschwefeler zu erwärmen;
eine Rohmaterial-Zuführeinheit (8), die dazu eingerichtet ist, das Rohmaterialgas dem Reformer zuzuführen; und
eine Wasserzuführeinheit (9), die dazu eingerichtet ist, das Wasser dem Reformer zuzuführen, wobei
die Steuereinheit (6) dazu eingerichtet ist, den Betrieb der ersten Heizeinrichtung, einen Betrieb der Rohmaterial-Zuführeinheit und einen Betrieb der Brennkammer zu starten, dann einen Betrieb der Wasserzuführeinheit zu starten und den Betrieb der ersten Heizeinrichtung zu stoppen, und dann den Betrieb der zweiten Heizeinrichtung zu starten.

3. Brennstoffzellensystem, umfassend:
den Wasserstoffgenerator gemäß Anspruch 1;
eine Brennstoffzelle (201), die dazu eingerichtet ist, eine Reaktion zwischen einem Brennstoffgas, das das von dem Wasserstoffgenerator zugeführte wasserstoffhaltige Gas ist, und einem Oxidationsgas zu bewirken, um elektrischen Strom zu erzeugen;
eine Oxidationsgas-Zuführeinheit (202), die dazu eingerichtet ist, der Brennstoffzelle das Oxidationsgas zuzuführen;
einen Wechselrichter (204), der dazu eingerichtet ist, von der Brennstoffzelle erzeugten Gleichstrom in Wechselstrom umzuwandeln;
eine Brennkammer (7), die dazu eingerichtet ist, den Reformer und/oder den CO-Entferner und/oder den ersten Entschwefeler zu erwärmen; und
eine Rohmaterial-Zuführeinheit (8), die dazu eingerichtet ist, das Rohmaterialgas an den Wasserstoffgenerator zu liefern, wobei:
bei einem Startschritt, der ausgeführt wird, bevor die Brennstoffzelle den elektrischen Strom erzeugt, die Steuereinheit (6), die in dem Wasserstoffgenerator enthalten ist, dazu eingerichtet ist, den Betrieb der ersten Heizeinrichtung und den Betrieb der zweiten Heizeinrichtung derart auszuführen, dass diese Betriebe einander nicht überlappen; und
bei einem Stromerzeugungsschritt, bei dem die Brennstoffzelle beginnt, den elektrischen Strom zu erzeugen, die Steuereinheit (6), die in dem Wasserstoffgenerator enthalten ist, dazu eingerichtet ist, den Betrieb der ersten Heizeinrichtung und den Betrieb der zweiten Heizeinrichtung zu stoppen und die Rohmaterial-Zuführeinheit zu veranlassen, das Rohmaterialgas über den ersten Entschwefeler (3a) dem Wasserstoffgenerator zuzuführen, wobei dessen Menge größer als die Menge an Rohmaterialgas ist, das in dem Startschritt zugeführt wird.

4. Brennstoffzellensystem nach Anspruch 3, bei dem
der Wechselrichter (204) mit einem Unterbrecher (401) verbunden ist, der mit einer kommerziellen Stromversorgung (300) verbunden ist;
bei dem Startschritt der elektrische Strom von der kommerziellen Stromversorgung durch den Unterbrecher dem Wechselrichter zugeführt wird, wobei der Unterbrecher (401) dazu eingerichtet ist, in der Lage zu sein, kollektiv oder einzeln Durchgänge, durch die der Wechselstrom von der kommerziellen Stromversorgung (300) dem Wechselrichter (204) und einem elektrischen Stromverbraucher (402) zugeführt wird, basierend auf dem elektrischen Unterbrechungsstrom zu öffnen und zu schließen; und
die Steuereinheit (6) dazu eingerichtet ist, den der ersten Heizeinrichtung zugeführten elektrischen Strom und den der zweiten Heizeinrichtung zugeführten elektrischen Strom basierend auf dem voreingestellten elektrischen Unterbrechungsstrom einzustellen, auf dessen Grundlage der Unterbrecher die Zufuhr des elektrischen Stroms von der kommerziellen Stromversorgung unterbricht.

5. Brennstoffzellensystem nach Anspruch 4, wobei das Brennstoffzellensystem an einem Verbrauchsort vorgesehen ist, der einen elektrischen Stromverbraucher umfasst, der mit dem Unterbrecher (401) zusammen mit dem Wechselrichter (204) verbunden ist, wobei der Unterbrecher mit der kommerziellen Stromversorgung verbunden ist,
wobei das Brennstoffzellensystem ferner ein elektrisches Strommessgerät umfasst, das an einer Verteilungsleitung angeordnet ist, die die kommerzielle Stromversorgung (300) und den Unterbrecher (401) verbindet und dazu eingerichtet ist, den von der kommerziellen Stromversorgung zum Verbrauchsort zugeführten elektrischen Strom zu erfassen, wobei:
in einem Fall, in dem eine elektrische Stromdifferenz, die man durch Subtrahieren des von dem elektrischen Strommessgerät erfassten elektrischen Versorgungsstroms von dem elektrischen Unterbrechungsstrom erhält, kleiner als ein vorbestimmter Wert ist, die Steuereinheit dazu eingerichtet ist, den Betrieb der ersten Heizeinrichtung und den Betrieb der zweiten Heizeinrichtung derart auszuführen, dass diese Vorgänge einander nicht überlappen; und
in einem Fall, in dem die elektrische Stromdifferenz gleich oder größer als der vorbestimmte Wert ist, die Steuereinheit dazu eingerichtet ist, den Betrieb der ersten Heizeinrichtung und den Betrieb der zweiten Heizeinrichtung so auszuführen, dass diese Vorgänge einander überlappen.

6. Verfahren zum Steuern eines Wasserstoffgenerators, wobei der Wasserstoffgenerator umfasst:
einen Reformer (1), der dazu eingerichtet ist, eine Reformierreaktion zwischen einem kohlenwasserstoffhaltigen Rohmaterialgas und Wasser zu bewirken, um ein wasserstoffhaltiges Gas zu erzeugen;
einen CO-Entferner (2), der dazu eingerichtet ist, Kohlenmonoxid in dem von dem Reformer erzeugten wasserstoffhaltigen Gas zu entfernen, wobei der CO-Entferner (2) einen CO-Shift-Konverter (2a) aufweist, der dazu eingerichtet ist, das Kohlenmonoxid in dem wasserstoffhaltigen Gas durch eine Shift-Reaktion zu entfernen, und ein CO-selektives Oxidationsmittel (2b), das dazu eingerichtet ist, das Kohlenmonoxid in dem wasserstoffhaltigen Gas durch eine CO-selektive Oxidationsreaktion zu entfernen;
einen CO-Shift-Temperaturdetektor (10a), der dazu eingerichtet ist, eine Temperatur des CO-Shift-Konverters (2a) zu erfassen;
einen CO-selektiven Oxidationstemperaturdetektor (10b), der dazu eingerichtet ist, eine Temperatur des CO-selektiven Oxidationsmittels (2b) zu erfassen;
einen ersten Entschwefeler (3, 3a), der dazu eingerichtet ist, eine Reaktion zwischen Schwefel in dem dem Reformer zugeführten Rohmaterialgas und Wasserstoff zur Entfernung des Schwefels zu bewirken;
einen zweiten Entschwefeler (3b), der dazu eingerichtet ist, den Schwefel in dem Rohmaterialgas durch Absorption zu entfernen, ohne die Reaktion zwischen dem Schwefel und dem Wasserstoff zu verursachen;
eine Rohmaterialgas-Umschalteinheit (13), die dazu eingerichtet ist, ein Zufuhrziel des Rohmaterialgases zwischen dem ersten Entschwefeler (3a) und dem zweiten Entschwefeler (3b) umzuschalten;
einen Entschwefelungs-Temperaturdetektor (11, 11a), der dazu eingerichtet ist, eine Temperatur des ersten Entschweflers (3a) zu erfassen;
eine erste Heizeinrichtung (4), die dazu eingerichtet ist, den CO-Shift-Konverter und/oder den CO-selektiven Oxidator zu erwärmen;
eine zweite Heizeinrichtung (5), die dazu eingerichtet ist, den ersten Entschwefeler (3a) zu erwärmen; und
eine Steuereinheit (6), die dazu eingerichtet ist, einen Betrieb der ersten Heizeinrichtung und einen Betrieb der zweiten Heizeinrichtung zu steuern, wobei
die Steuereinheit (6) die erste Heizeinrichtung und die zweite Heizeinrichtung steuert, um:
den Betrieb der ersten Heizeinrichtung zu starten,
anschließend den Betrieb der ersten Heizeinrichtung, in einem Fall zu stoppen, in dem die von dem CO-Shift-Temperaturdetektor (10a) erfasste Temperatur gleich oder höher als eine voreingestellte zweite Temperatur ist, und die durch den CO-selektiven Oxidationstemperaturdetektor (10b) erfasste Temperatur gleich oder höher als eine voreingestellte dritte Temperatur ist, und
anschließend den Betrieb der zweiten Heizeinrichtung zu starten,
die Rohmaterialgas-Umschalteinheit zu veranlassen das Zufuhrziel des Rohmaterialgases von dem zweiten Entschwefeler zu dem ersten Entschwefeler in einem Fall umzuschalten, in dem die von dem Entschwefelungs-Temperaturdetektor erfasste Temperatur gleich oder höher als eine voreingestellte vierte Temperatur ist, und
den Betrieb der zweiten Heizeinrichtung in einem Fall zu stoppen, in dem die durch den Entschwefelungs-Temperaturdetektor erfasste Temperatur gleich oder höher als eine voreingestellte fünfte Temperatur ist.

## Revendications

1. Générateur d'hydrogène comprenant :
un reformeur (1) configuré pour provoquer une réaction de reformage entre un gaz matière première contenant un hydrocarbure et de l'eau pour générer un gaz contenant de l'hydrogène ;
un dispositif d'élimination de CO (2) configuré pour retirer le monoxyde de carbone dans le gaz contenant de l'hydrogène généré par le reformeur, le dispositif d'élimination de CO (2) comprenant un convertisseur de conversion de CO (2a) configuré pour retirer le monoxyde de carbone dans le gaz contenant de l'hydrogène par une réaction de conversion et un dispositif d'oxydation sélectif vis-à-vis du CO (2b) configuré pour retirer le monoxyde de carbone dans le gaz contenant de l'hydrogène par une réaction d'oxydation sélective vis-à-vis du CO ;
un détecteur de température de conversion de CO (10a) configuré pour détecter une température du convertisseur de conversion de CO (2a) ;
un détecteur de température d'oxydation sélective vis-à-vis du CO (10b) configuré pour détecter une température du dispositif d'oxydation sélectif vis-à-vis du CO (2b) ;
un premier dispositif de désulfurisation (3, 3a) configuré pour provoquer une réaction entre le soufre dans le gaz matière première alimenté au reformeur et l'hydrogène pour retirer le soufre ;
un second dispositif de désulfurisation (3b) configuré pour retirer le soufre dans le gaz matière première par absorption sans provoquer de réaction entre le soufre et l'hydrogène,
une unité de bascule de gaz matière première (13) configurée pour faire basculer une destination d'alimentation du gaz matière première entre le premier dispositif de désulfurisation (3a) et le second dispositif de désulfurisation (3b) ;
un détecteur de température de désulfurisation (11, 11a) configuré pour détecter une température du premier dispositif de désulfurisation (3a) ;
un premier dispositif chauffant (4) configuré pour chauffer au moins l'un du convertisseur de conversion de CO et du dispositif d'oxydation sélectif vis-à-vis de CO ;
un second dispositif chauffant (5) configuré pour chauffer le premier dispositif de désulfurisation (3a) ; et
un dispositif de commande (6) configuré pour commander un fonctionnement du premier dispositif chauffant et un fonctionnement du second dispositif chauffant,
le dispositif de commande (6) étant configuré pour :
démarrer le fonctionnement du premier dispositif chauffant,
puis arrêter le fonctionnement du premier dispositif chauffant, dans un cas où la température détectée par le détecteur de température de conversion de CO (10a) est supérieure ou égale à une seconde température prédéfinie, et la température détectée par le détecteur de température d'oxydation sélective vis-à-vis de CO (10b) est supérieure ou égale à une troisième température prédéfinie, et
ensuite démarrer le fonctionnement du second dispositif chauffant,
amener l'unité de bascule de gaz matière première à faire basculer la destination d'alimentation du gaz matière première du second dispositif de désulfurisation vers le premier dispositif de désulfurisation dans un cas où la température détectée par le détecteur de température de désulfurisation est supérieure ou égale à une quatrième température prédéfinie, et
arrêter le fonctionnement du second dispositif chauffant dans un cas où la température détectée par le détecteur de température de désulfurisation est supérieure ou égale à une cinquième température prédéfinie.

2. Générateur d'hydrogène selon la revendication 1, comprenant en outre :
un dispositif de combustion (7) configuré pour chauffer au moins l'un du reformeur, du dispositif d'élimination de CO, et du premier dispositif de désulfurisation ;
une unité d'alimentation en matière première (8) configurée pour alimenter le gaz matière première au reformeur, et
une unité d'alimentation d'eau (9) configurée pour alimenter l'eau au reformeur,
le dispositif de commande (6) étant configuré pour démarrer le fonctionnement du premier dispositif chauffant, un fonctionnement de l'unité d'alimentation en matière première, et un fonctionnement du dispositif de combustion, puis démarrer un fonctionnement de l'unité d'alimentation d'eau et arrêter le fonctionnement du premier dispositif chauffant, et ensuite démarrer le fonctionnement du second dispositif chauffant.

3. Système pile à combustible comprenant :
le générateur d'hydrogène selon la revendication 1 ;
une pile à combustible (201) configurée pour provoquer une réaction entre un gaz combustible qui est le gaz contenant de l'hydrogène alimenté depuis le générateur d'hydrogène et un gaz oxydant pour générer de l'énergie électrique ;
une unité d'alimentation de gaz oxydant (202) configurée pour alimenter le gaz oxydant à la pile à combustible,
un inverseur (204) configuré pour convertir l'énergie CC, générée par la pile à combustible, en énergie CA ;
un dispositif de combustion (7) configuré pour chauffer au moins l'un du reformeur, du dispositif d'élimination de CO, et du premier dispositif de désulfurisation ; et
une unité d'alimentation en matière première (8) configurée pour alimenter le gaz matière première au générateur d'hydrogène :
dans une étape de démarrage exécutée avant que la pile à combustible génère l'énergie électrique, le dispositif de commande (6) compris dans le générateur d'hydrogène est configuré pour exécuter le fonctionnement du premier dispositif chauffant et le fonctionnement du second dispositif chauffant de sorte que ces fonctionnements ne se chevauchent pas l'un l'autre ; et
dans une étape de génération d'énergie électrique dans laquelle la pile à combustible démarre la production de l'énergie électrique, le dispositif de commande (6) compris dans le générateur d'hydrogène est configuré pour stopper le fonctionnement du premier dispositif chauffant et le fonctionnement du second dispositif chauffant et pour amener l'unité d'alimentation en matière première à alimenter le gaz matière première, par l'intermédiaire du premier dispositif de désulfurisation (3a), au générateur d'hydrogène, dont la quantité est supérieure à la quantité de gaz matière première alimenté dans l'étape de démarrage.

4. Système pile à combustible selon la revendication 3 :
l'inverseur (204) étant raccordé à un interrupteur (401) branché à une alimentation d'énergie commerciale (300) ;
dans l'étape de démarrage, l'énergie électrique est alimentée depuis l'alimentation d'énergie commerciale à travers l'interrupteur à l'inverseur, l'interrupteur (401) étant configuré pour être capable d'ouvrir et de fermer collectivement ou individuellement les passages, à travers lesquels l'énergie CA est alimentée à partir de l'alimentation d'énergie commerciale (300) vers l'inverseur (204) et une charge d'énergie électrique (402), sur la base de l'énergie électrique de rupture ; et
le dispositif de commande (6) étant configuré pour régler l'énergie électrique alimentée au premier dispositif chauffant et l'énergie électrique alimentée au second dispositif chauffant sur la base de l'énergie électrique de rupture prédéfinie sur la base de laquelle l'interrupteur coupe l'alimentation de l'énergie électrique à partir de l'alimentation d'énergie commerciale.

5. Système pile à combustible selon la revendication 4, le système pile à combustible étant fourni au niveau d'un lieu de consommation comprenant une charge d'énergie électrique raccordée à l'interrupteur (401) conjointement à l'inverseur (204), l'interrupteur étant raccordé à l'alimentation d'énergie commerciale,
le système pile à combustible comprenant en outre un dispositif de mesure d'énergie électrique qui est disposé sur une ligne de distribution raccordant l'alimentation d'énergie commerciale (300) et l'interrupteur (401) et qui est configuré pour détecter l'énergie électrique alimentée depuis l'alimentation d'énergie commerciale au lieu de consommation :
dans un cas où une différence d'énergie électrique obtenue par soustraction de l'énergie électrique d'alimentation, détectée par le dispositif de mesure d'énergie électrique, à partir de l'énergie électrique de rupture est inférieure à une valeur prédéterminée, le dispositif de commande est configuré pour exécuter le fonctionnement du premier dispositif chauffant et le fonctionnement du second dispositif chauffant de sorte que ces fonctionnements ne se chevauchent pas l'un l'autre ; et
dans un cas où la différence d'énergie électrique est supérieure ou égale à la valeur prédéterminée, le dispositif de commande est configuré pour exécuter le fonctionnement du premier dispositif chauffant et le fonctionnement du second dispositif chauffant de sorte que ces fonctionnements se chevauchent l'un l'autre.

6. Procédé de commande d'un générateur d'hydrogène, le générateur d'hydrogène comprenant :
un reformeur (1) configuré pour provoquer une réaction de reformage entre un gaz matière première contenant un hydrocarbure et de l'eau pour générer un gaz contenant de l'hydrogène ;
un dispositif d'élimination de CO (2) configuré pour retirer le monoxyde de carbone dans le gaz contenant de l'hydrogène généré par le reformeur, le dispositif d'élimination de CO (2) comprenant un convertisseur de conversion de CO (2a) configuré pour retirer le monoxyde de carbone dans le gaz contenant de l'hydrogène par une réaction de conversion et un dispositif d'oxydation sélectif vis-à-vis de CO (2b) configuré pour retirer le monoxyde de carbone dans le gaz contenant de l'hydrogène par une réaction d'oxydation sélective vis-à-vis de CO ;
un détecteur de température de conversion de CO (10a) configuré pour détecter une température du convertisseur de conversion de CO (2a) ;
un détecteur de température d'oxydation sélective vis-à-vis de CO (10b) configuré pour détecter une température du dispositif d'oxydation sélectif vis-à-vis de CO (2b) ;
un premier dispositif de désulfurisation (3) configuré pour provoquer une réaction entre le soufre dans le gaz matière première alimenté au reformeur et l'hydrogène pour retirer le soufre ;
un second dispositif de désulfurisation (3b) configuré pour retirer le soufre dans le gaz matière première par absorption sans provoquer de réaction entre le soufre et l'hydrogène ;
une unité de bascule de gaz matière première (13) configurée pour faire basculer une destination d'alimentation du gaz matière première entre le premier dispositif de désulfurisation (3a) et le second dispositif de désulfurisation (3b),
un détecteur de température de désulfurisation (11, 11a) configuré pour détecter une température du premier dispositif de désulfurisation (3a) ;
un premier dispositif chauffant (4) configuré pour chauffer au moins l'un du convertisseur de conversion de CO et du dispositif d'oxydation sélectif vis-à-vis de CO ;
un second dispositif chauffant (5) configuré pour chauffer le premier dispositif de désulfurisation ; et
un dispositif de commande (6) configuré pour commander un fonctionnement du premier dispositif chauffant et un fonctionnement du second dispositif chauffant,
le dispositif de commande (6) commandant le premier dispositif chauffant et le second dispositif chauffant afin de
démarrer le fonctionnement du premier dispositif chauffant,
puis d'arrêter le fonctionnement du premier dispositif chauffant, dans un cas où la température détectée par le détecteur de température de conversion de CO (10a) est supérieure ou égale à une seconde température prédéfinie, et la température détectée par le détecteur de température d'oxydation sélective vis-à-vis de CO (10b) est supérieure ou égale à une troisième température prédéfinie, et
ensuite démarrer le fonctionnement du second dispositif chauffant,
amener l'unité de bascule de gaz matière première à faire basculer la destination d'alimentation du gaz matière première du second dispositif de désulfurisation vers le premier dispositif de désulfurisation dans un cas où la température détectée par le détecteur de température de désulfurisation est supérieure ou égale à une quatrième température prédéfinie, et
arrêter le fonctionnement du second dispositif chauffant dans un cas où la température détectée par le détecteur de température de désulfurisation est supérieure ou égale à une cinquième température prédéfinie.
